**Europäisches Patentamt**

(19) **European Patent Office**

**Office européen des brevets**

(11) Veröffentlichungsnummer: **0 038 462**

**A2**

(12) **EUROPÄISCHE PATENTANMELDUNG**

(21) Anmeldenummer: **81102590.7**

(22) Anmeldetag: **07.04.81**

(51) Int. Cl.³: **F 16 H 15/22**

(30) Priorität: **19.04.80 DE 3015204**
**08.10.80 DE 3037933**

(43) Veröffentlichungstag der Anmeldung:
**28.10.81 Patentblatt 81/43**

(84) Benannte Vertragsstaaten:
**AT BE DE FR GB NL SE**

(71) Anmelder: **ITT INDUSTRIES, INC.**
**320 Park Avenue**
**New York, NY 10022(US)**

(84) Benannte Vertragsstaaten:
**BE FR GB NL SE AT**

(71) Anmelder: **Hans Heynau GmbH**
**Moosacher Strasse 51**
**D-8000 München 40(DE)**

(84) Benannte Vertragsstaaten:
**DE**

(72) Erfinder: **Tippmann, Heinrich**
**Bauseweinallee 83**
**D-8000 München 60(DE)**

(72) Erfinder: **Helm, August**
**Hubertusstrasse 11**
**D-8131 Kempfenhausen(DE)**

(72) Erfinder: **Vetter, Ulrich**
**Untere Weidenstrasse 19**
**D-8000 München 90(DE)**

(74) Vertreter: **Thul, Leo, Dipl.-Phys. et al,**
**Kurze Strasse 8 Postfach 300 929**
**D-7000 Stuttgart 30(DE)**

(54) **Selbsttätig stufenlos einstellbares Schwenkgetriebe.**

(57) Bei einem selbsttätig stufenlos einstellbarem Schwenkgetriebe ist der Schwenkarm von der Mittelstellung aus nach einer oder nach beiden Richtungen schwenkbar. Der Schwenkarm stützt sich dabei in der entsprechenden Schwenkrichtung gegen mindestens ein eine Gegenkraft erzeugendes Element, das z.B. eine Feder, ein Gewicht oder ein Magnetfeld sein kann, ab.

EP 0 038 462 A2

Fig.1

Patentanwalt
Dipl.-Phys. Leo Thul
S t u t t g a r t

H.Tippmann-A.Helm-U.Vetter 14/17-2-1

## Selbsttätig stufenlos einstellbares Schwenkgetriebe

Die Erfindung betrifft ein selbsttätig stufenlos einstellbares Schwenkgetriebe, bei dem Antrieb und Abtrieb über ein Reibgetriebe mit axial wirkender Anpreßvorrichtung miteinander gekoppelt sind, von dem ein Teil an einem Schwenkarm befestigt ist, an dem gleichfalls eine mit dem Reibgetriebe gekoppelte, das Drehmoment auf die Abtriebswelle übertragende Übersetzung angeordnet ist.

Stufenlos einstellbare Schwenkgetriebe der vorstehend genannten Art sind bekannt (vgl. "Stufenlos verstellbare mechanische Antriebe" in ingenieur digest, Heft 12, Dezember 1964, Seiten 19 bis 34). Bei den bekannten Schwenkgetrieben wird die Drehzahlübersetzung zwischen

./.

ZT/P3-Bö/Kc
24.03.1981

H.Tippmann-A.Helm-U.Vetter 14/17-2-1

Antriebs- und Abtriebswelle dadurch verändert, daß durch Schwenken des Schwenkarmes die Übersetzung zwischen Kegel und Ring des Reibgetriebes verstellt wird. Um diese Verstellung ausführen zu können, ist eine mit einem Handrad versehene Gewindespindel vorgesehen, welche eine mit dem Schwenkarm verbundene Mutter durchdringt. Um bei den bekannten Schwenkgetrieben einen ständigen Kraftschluß zwischen Kegel und Ring des Reibgetriebes sicherzustellen, ist eine Anpreßvorrichtung vorgesehen, welche Kegel und Ring axial gegeneinander preßt.

Die vorstehend erwähnten bekannten Schwenkgetriebe besitzen demnach eine zwangsweise Verstellung der Übersetzung, welche durch Verdrehen der Gewindespindel vorgenommen wird. Wir nun bei einem solchen Getriebe an der Abtriebswelle ein Drehmoment abgenommen, so tritt am Schwenkarm eine dem Drehmoment an der Antriebswelle proportionale Rückstellkraft auf, welche - bei einer Zahnradübersetzung zwischen Schwenkarm und Abtriebswelle - die Tendenz aufweist, den Schwenkarm in einer der Drehrichtung der Abtriebswelle entgegengesetzten Drehrichtung zu verschenken. Bei den bekannten Schwenkgetrieben mit zwangsweiser Übersetzungsverstellung wird diese Rückstellkraft vom Schwenkarmantrieb (Gewindespindel) bzw. dessen Lagerung kompensiert.

Es sind aber auch schon Schwenkgetriebe bekannt geworden, bei denen versucht worden ist, die Rückstellkraft des Schwenkarmes zur selbsttätigen Übersetzungsverstellung zu verwenden (CH-PS 243 659). Bei diesem bekannten

./.

H.Tippmann-A.Helm-U.Vetter 14/17-2-1

Schwenkgetriebe besteht das Reibgetriebe aus einer Mehrfachanordnung von Doppelkegeln und Ringen, welche innerhalb eines im frei schwenkbaren Schwenkarm drehbar gelagerten Hohlzylinders angeordnet sind, der seinerseits in den Antriebsweg zwischen Antriebs- und Abtriebswelle eingeschaltet ist. In dem Hohlzylinder ist gleichfalls eine axial wirkende Druckfeder eingesetzt, welche einerseits die Doppelkegel und Ringe axial aneinanderpreßt und andererseits eine der Rückstellkraft des Schwenkarmes entgegenwirkende Kraft aufbringen soll, damit in einer bestimmten Schwenkstellung des Schwenkarmes ein Gleichgewicht zwischen diesen beiden Kräften und damit eine stabile Lage des Schwenkarmes erzielt werden kann. Mit diesem bekannten Schwenkgetriebe soll eine selbsttätige Anpassung der Übersetzung zwischen Antriebs- und Abtriebswelle dadurch erzielt werden, daß bei zunehmend an der Abtriebswelle gefordertem Abtriebsdrehmoment die gleichzeitig steigende Rückstellkraft das Reibgetriebe nach einer größeren Übersetzung ins Langsame verstellt, wodurch an der Abtriebswelle ein höheres Drehmoment bei verringerter Abtriebsdrehzahl zur Verfügung steht.

Die bei dem bekannten Schwenkgetriebe vorgesehene axial wirkende Druckfeder dient in erster Linie dazu, die Anpreßkraft für die Reibkörper zu erzeugen. Von dieser Anpreßkraft wird in Abhängigkeit vom Kegelwinkel der Reibkörper, deren Reibungskoeffizienten und dem Übersetzungsverhältnis des Zahnradpaares (feste Übersetzung) eine Seitenkraft abgezweigt, die im Schwenkrahmen der Rückstellkraft des Antriebsdrehmomentes entgegenwirken und mit dieser einen Gleichgewichtszustand herstellen soll.

./.

H.Tippmann-A.Helm-U.Vetter 14/17-2-1

Das bekannte Schwenkgetriebe besitzt den Nachteil, daß der gewünschte Drehmomentenbereich, in dem die selbständige Änderung der Übersetzung im stufenlosen Reibgetriebe erfolgen soll, durch die vorstehend genannten konstruktionsbedingten Parametern (Anpreßkraft, Kegelwinkel, Reibungskoeffizient und Zahnradpaar) festgelegt ist und nicht von diesen unabhängig frei gewählt werden kann. Es kann auch keiner dieser Parameter geändert werden, ohne daß sich dadurch die Rückstellkraft im Schwenkrahmen ändern würde. Daher sind beim bekannten Schwenkgetriebe andere Anpreßvorrichtungen, beispielsweise solche mit veränderlichen Anpreßkräften, wie stirnseitig anstellbare Kurvenscheiben, nicht einsetzbar.

Die der Erfindung zugrunde liegende Aufgabe besteht deshalb darin, ein selbsttätig stufenlos einstellbares Schwenkgetriebe zu schaffen, bei dem der Drehmomentbereich, in dem die selbsttätige Verstellung der Übersetzung in Abhängigkeit vom Abtriebsdrehmoment wirksam ist, unabhängig von den konstruktionsbedingten Parametern eingestellt oder vorgewählt werden kann. Dies soll die Möglichkeit einschließen, den einen oder anderen der Parameter (z.B. das Zahnradpaar) zu ändern, ohne daß sich der wirksame Drehmomentenbereich ändert.

Das neue Schwenkgetriebe soll weiterhin die Möglichkeit eröffnen, die relative Lage des wirksamen Drehmomentbereiches während des Betriebes zu verstellen, um so,

./.

0038462

H.Tippmann-A.Helm-U.Vetter 14/17-2-1

ohne Verzicht auf die selbsttätige Anpaßbarkeit des Getriebes, das Abtriebsdrehmoment bzw. die Abtriebsdrehzahl an die äußerden Erfordernisse (z.B. größere Geschwindigkeit eines Fahrzeuges) anpassen zu können.

Das neue Schwenkgetriebe soll aber auch in der Weise auszugestalten sein, daß die Übersetzung, unabhängig von dem an der Abtriebswelle geforderten Drehmoment, für einen bestimmten Drehmomentbereich konstant bleibt und erst bei Überschreiten eines bestimmten Drehmomentes die selbsttätig stufenlose Verstellung wirksam und beim Unterschreiten dieses Drehmomentes wieder unwirksam wird.

Nun sind aber in der Praxis Anwendungsfälle für ein selbsttätig stufenlos einstellbares Schwenkgetriebe vorhanden, bei denen der Kraftfluß umgekehrt wird und die Übersetzung gleichfalls selbsttätig ins Langsame verstellt werden soll. Dieser Anwendungsfall tritt beispielsweise bei der Bergabfahrt von Fahrzeugen auf. In diesen Fällen ändert die auf den Schwenkarm wirkende Reaktionskraft F ihre Richtung, d.h. sie ändert ihr Vorzeichen.

Der Anmeldung liegt daher auch die Aufgabe zugrunde, ein Schwenkgetriebe in der Weise weiterzubilden, daß sowohl bei auf den Schwenkarm einwirkender positiver Rückstellkraft, als auch bei auf den Schwenkarm einwirkender negativer Rückstellkraft eine selbsttätig stufenlose Verstellung des Schwenkgetriebes stattfinden kann.

./.

H.Tippmann-A.Helm-U.Vetter 14/17-2-1

Diese Aufgabe wird erfindungsgemäß durch die im Anspruch 1 angegebenen Maßnahmen gelöst.

Ausgestaltungen bzw. vorteilhafte Weiterbildungen der
Erfindung sind in den Unteransprüchen enthalten.

Die Erfindung wird anhand von Beispielen in den nachfolgenden Zeichnungen erläutert. In den Zeichnungen
zeigt:

Fig. 1    eine prinzipielle Ausführungsform eines Ge-
          triebes in perspektivischer Darstellung,

Fig. 2    eine Seitenansicht des Schwenkgetriebes gemäß
          Fig. 1,

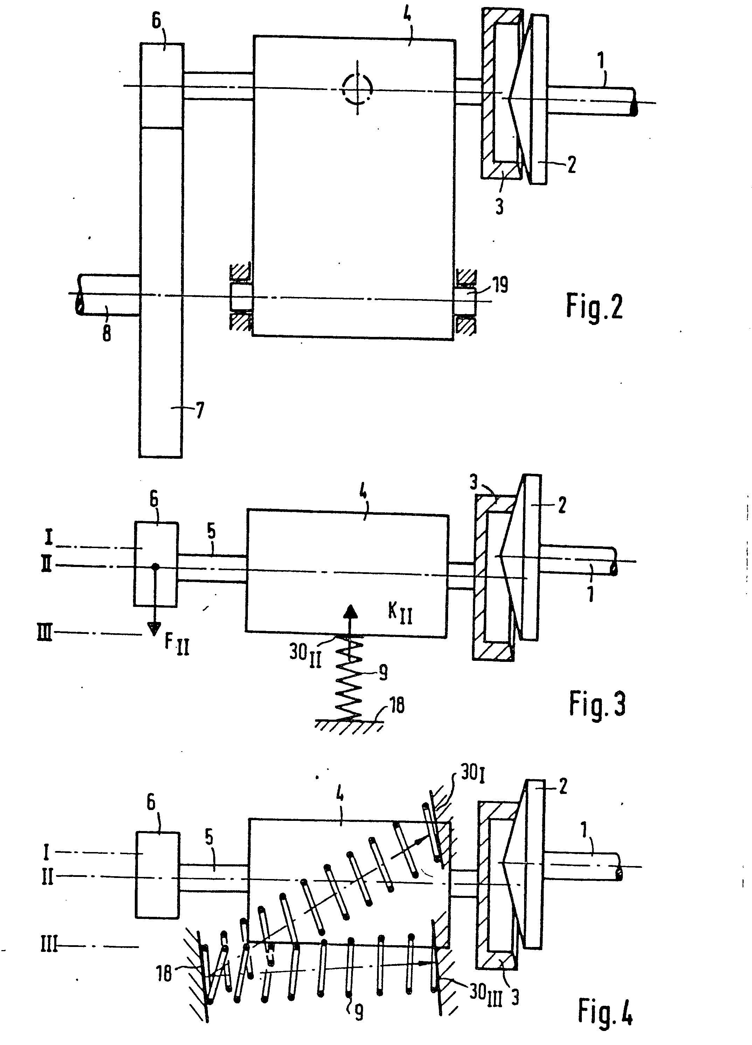

Fig. 3    eine Draufsicht auf das Schwenkgetriebe gemäß
          Fig. 1,

Fig. 4    eine Draufsicht auf eine andere Ausführungs-
          form des Schwenkgetriebes,

Fig. 5

und   6   zwei verschiedene Ausführungsformen des
          Schwenkgetriebes mit Mitteln zum Einstellen
          des wirksamen Drehmomentenbereiches und einer
          Begrenzung des selbsttätigen Verstellbe-
          reiches,

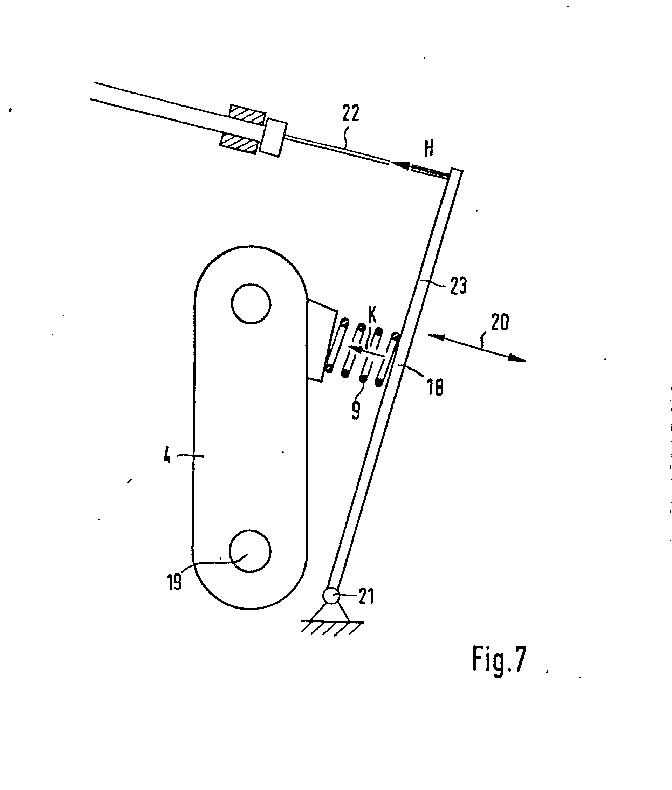

Fig. 7    eine andere Ausführungsform der Einstellvor-
          richtung,

Fig. 8

und   9   Einzelheiten bei einem Schwenkgetriebe gemäß
          Fig. 4,

./.

H.Tippmann-A.Helm-U.Vetter 14/17-2-1

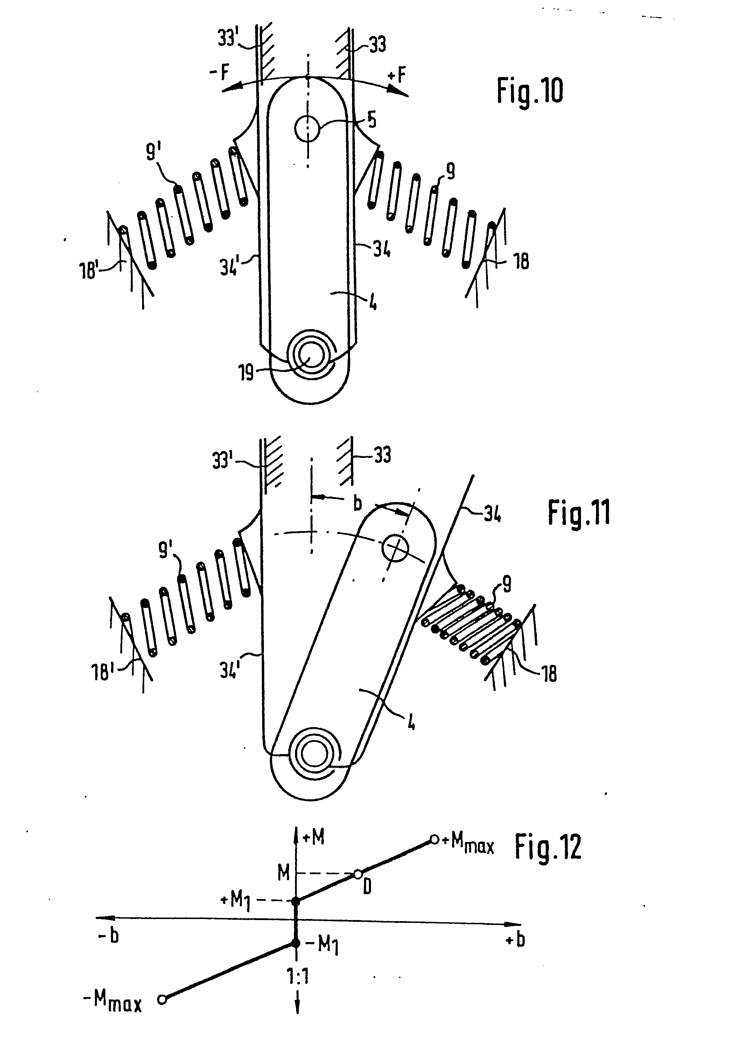

Fig.10    eine Ausführungsform des erfindungsgemäßen
         Schwenkgetriebes für positive und negative
         Reaktionskraft mit dem Schwenkarm in Mittel-
         stellung,

Fig.11    das Schwenkgetriebe nach Fig. 10, bei dem der
         Schwenkarm durch eine positive Rückstellkraft
         verschwenkt ist,

Fig.12    eine Kennlinie des Schwenkgetriebes gemäß
         Fig. 10 und Fig. 11,

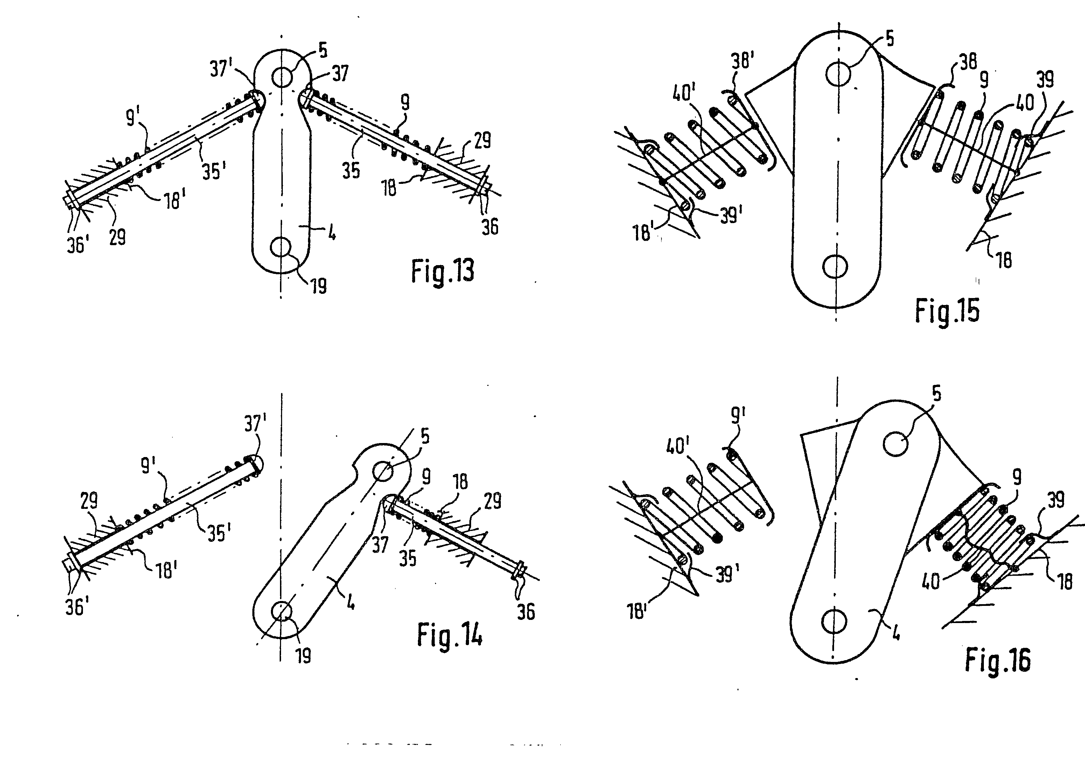

Fig.13    eine andere Ausführungsform des Schwenkge-
         triebes mit dem Schwenkarm in Mittelstellung,

Fig.14    das Schwenkgetriebe gemäß Fig. 13, bei dem
         der Schwenkarm durch eine positive Rückstell-
         kraft verschwenkt ist,

Fig.15    eine weitere Ausführungsform des Schwenkge-
         triebes mit dem Schwenkarm in Mittelstellung,

Fig.16    das Schwenkgetriebe gemäß Fig 15, bei dem der
         Schwenkarm durch eine positive Rückstellkraft
         verschwenkt ist,

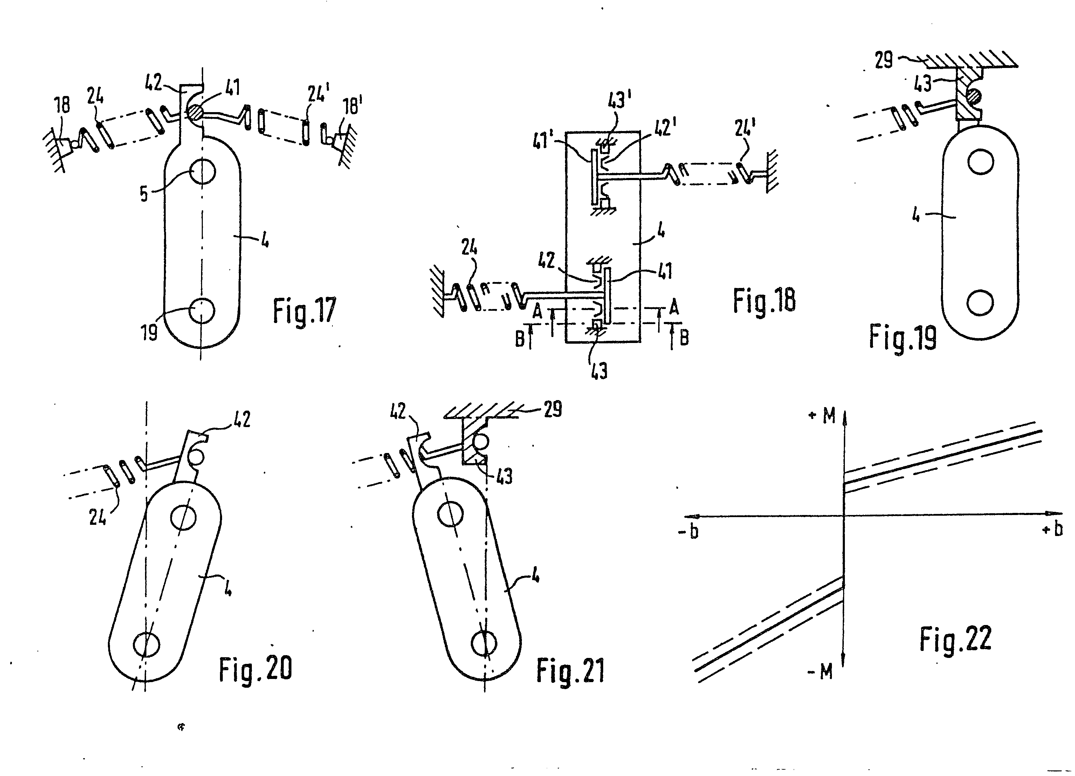

Fig.17    eine Ausführungsform des Schwenkgetriebes,
         bei dem die federnden Elemente Zugfedern
         sind, dargestellt als Schnitt entlang der
         Linie AA gemäß Fig. 18,

Fig.18    eine Draufsicht auf das Schwenkgetriebe gemäß
         Fig. 17,

Fig.19    einen Schnitt entlang der Linie BB (Fig. 18)
         durch das Schwenkgetriebe gemäß Fig. 18,

./.

H.Tippmann-A.Helm-U.Vetter 14/17-2-1

Fig.20  das Schwenkgetriebe gemäß Fig. 17, bei dem
        der Schwenkarm durch eine positive Rückstell-
        kraft verschwenkt ist,

Fig.21  das Schwenkgetriebe gemäß Fig. 17, bei dem
        der Schwenkarm durch eine negative Rückstell-
        kraft verschwenkt ist,

Fig.22  die Darstellung von Kennlinien eines Schwenk-
        getriebes, bei dem die federnden Elemente
        verschiedene Charakteristiken aufweisen und
        die Widerlager verstellbar ausgeführt sind,

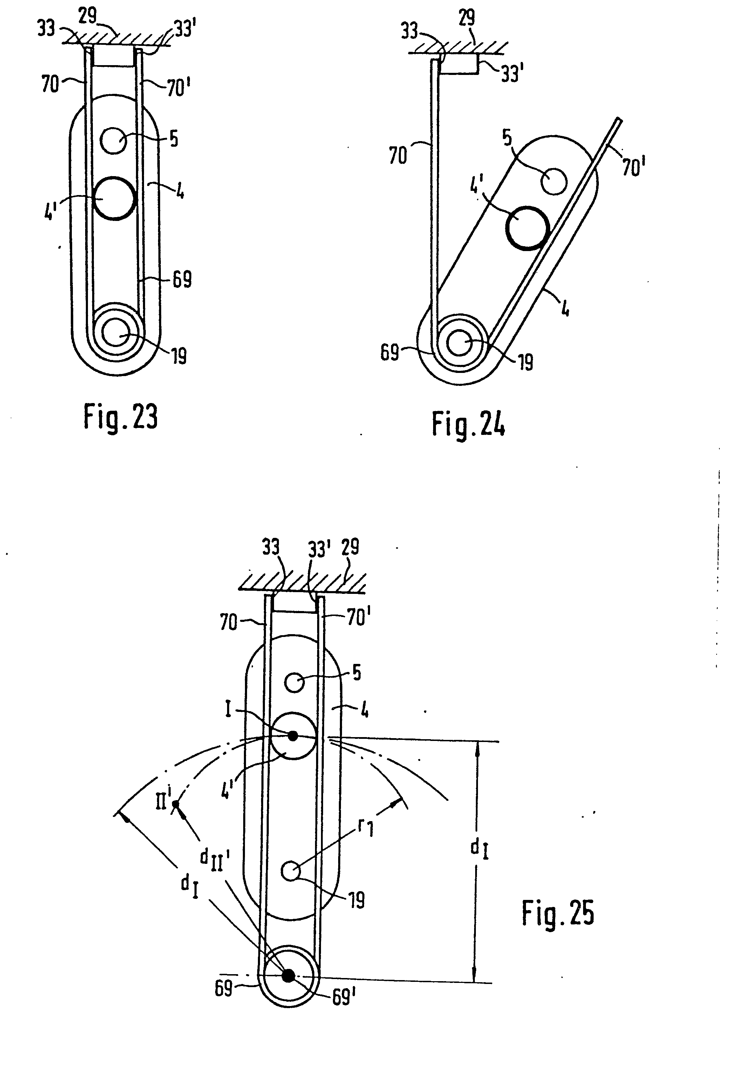

Fig.23  eine Ausführungsform des Schwenkgetriebes mit
        einem Schwenkarm, bei dem die beiden federn-
        den Elemente in einer Schenkelfeder vereinigt
        sind,

Fig.24  eine Ausführungsform des Schwenkgetriebes
        nach Fig. 23, bei dem der Schwenkarm durch
        eine positive Rückstellkraft verschwenkt ist,

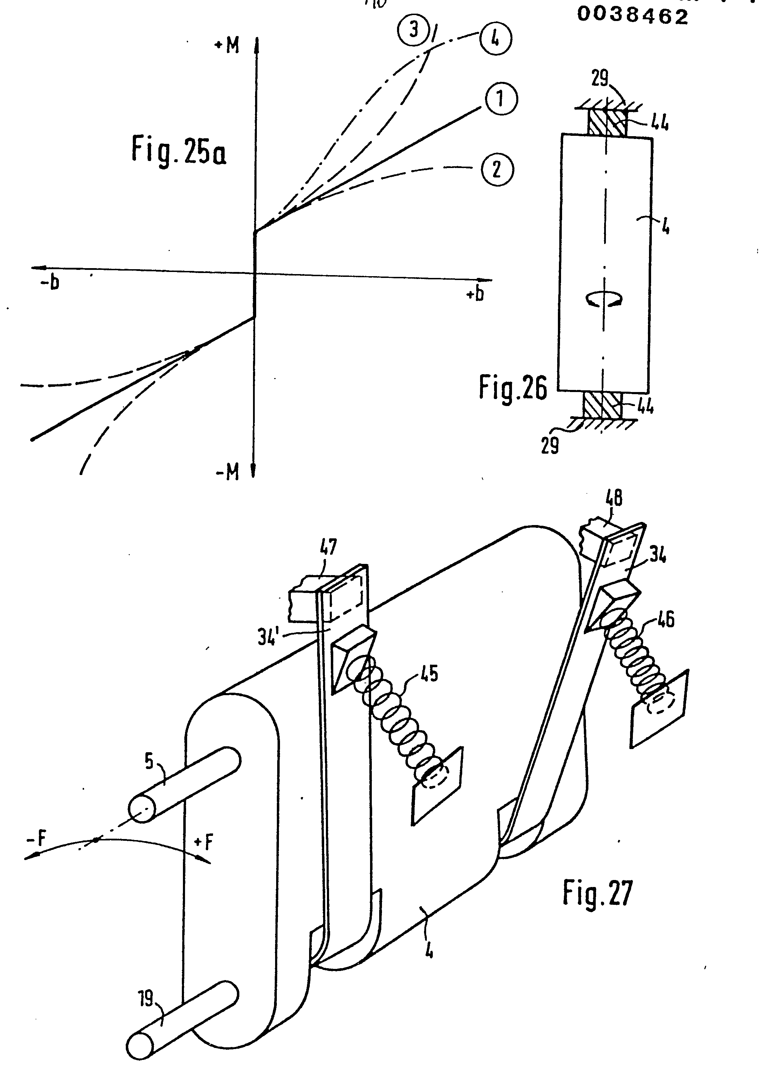

Fig.25  eine Variante des Schwenkgetriebes nach
        Fig. 23, bei dem der Drehpunkt der Schenkel-
        feder nicht mit dem Drehpunkt des Schwenk-
        armes zusammenfällt,

Fig.25a mehrere Kennlinien von einigen Ausführungs-
        beispielen von Schwenkgetrieben nach der Er-
        findung, insbesondere nach Fig. 25,

Fig.26  ein Ausführungsbeispiel eines Schwenkge-
        triebes, bei dem Gummi-Torsions-Federn ver-
        wendet sind,

./.

H.Tippmann-A.Helm-U.Vetter 14/17-2-1


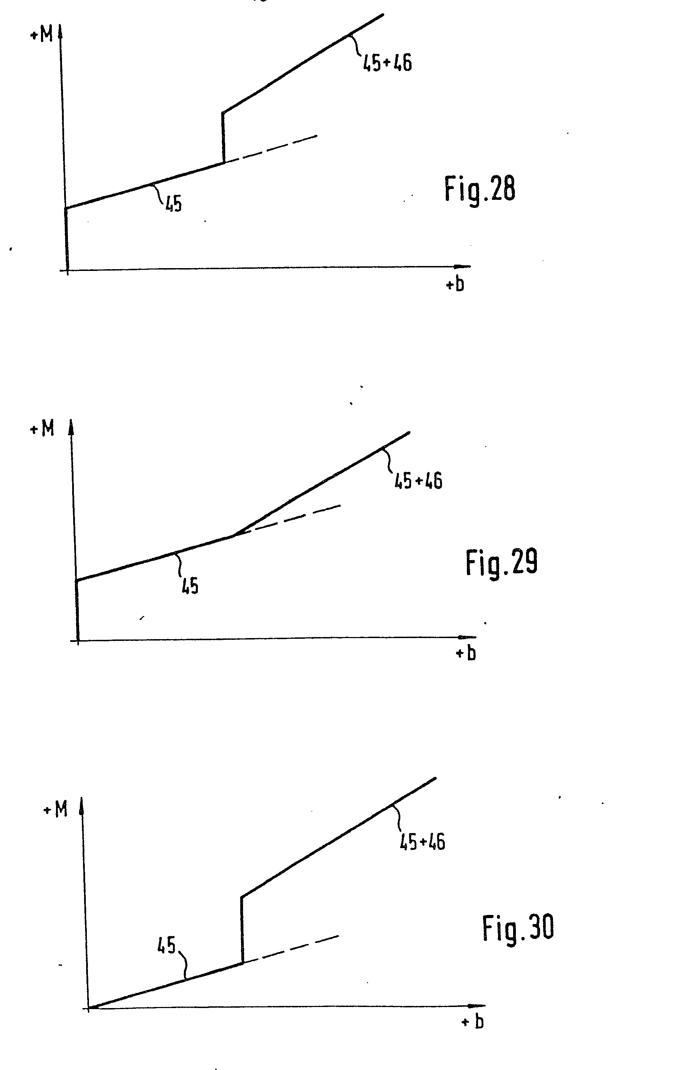

Fig.27    ein Ausführungsbeispiel eines Schwenkgetriebes, in perspektivischer Darstellung, bei dem mehrere Federn auf einer Seite des Schwenkarmes angeordnet sind,

Fig.28,
    29,    mehrere Kennlinien von Schwenkgetriebeausführ-
    30    rungen, gleich oder ähnlich Fig. 27, bei denen die Federn unterschiedliche Eigenschaften aufweisen,

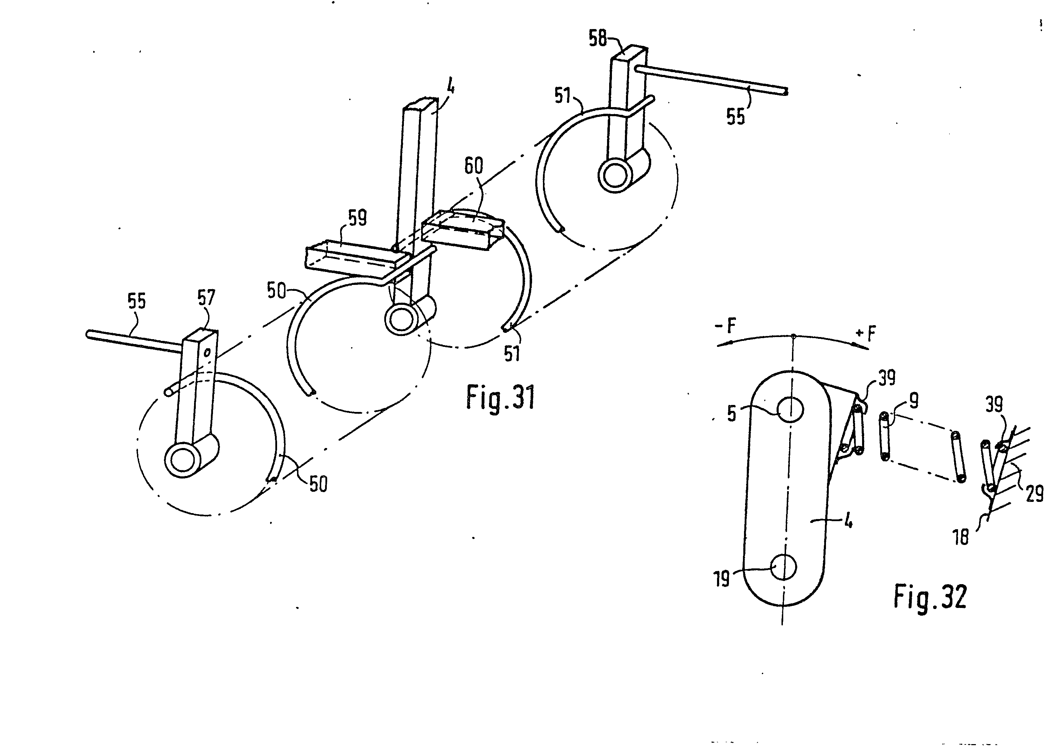

Fig.31    ein Ausführungsbeispiel eines Schwenkgetriebes in perspektivischer Darstellung, bei dem in beiden Schwenkrichtungen Drehfedern angeordnet sind,

Fig.32    ein Ausführungsbeispiel eines Schwenkgetriebes, bei dem für beide Schwenkrichtungen nur eine Feder zugeordnet ist,

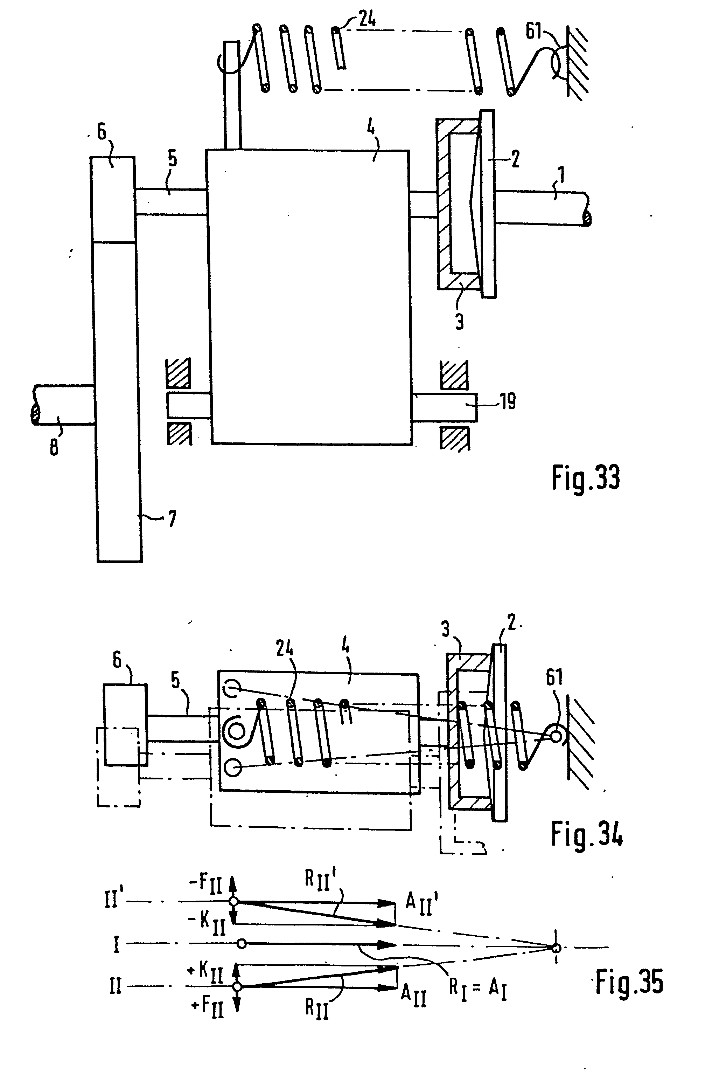

Fig.33    ein Ausführungsbeispiel eines Schwenkgetriebes mit nur einer Feder, in Seitenansicht,

Fig.34    das Ausführungsbeispiel des Schwenkgetriebes nach Fig. 33 in Draufsicht,

Fig.35    Kräfteparallelogramme für das Ausführungsbeispiel nach den Fig. 33 und 34,

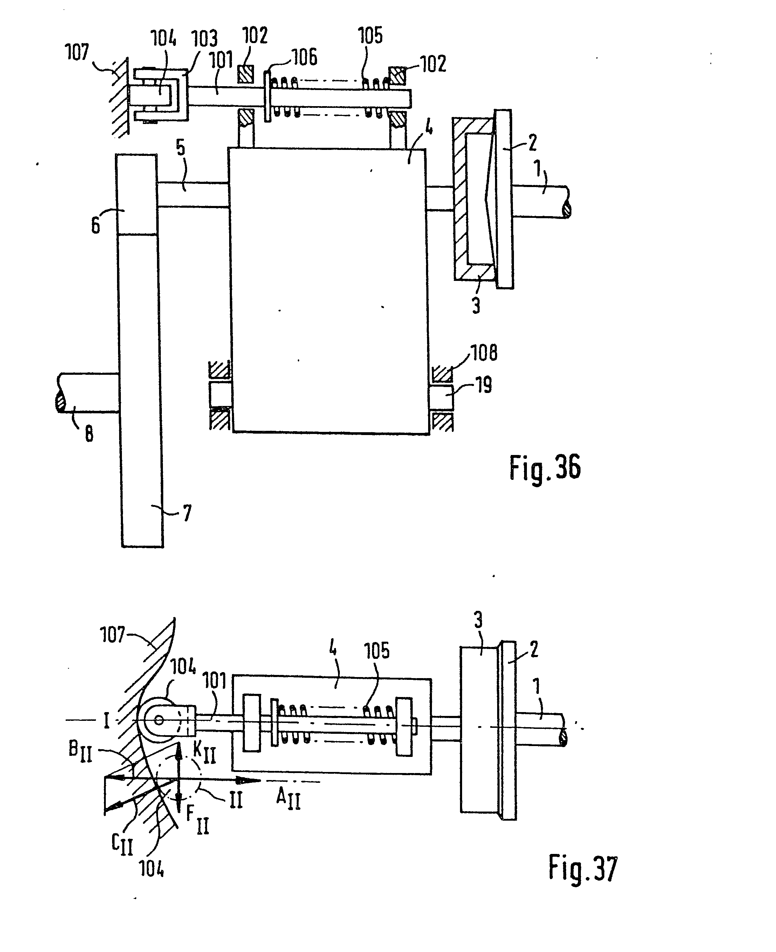

Fig.36    eine Ausführungsform eines Schwenkgetriebes, bei dem die Verstellfeder nicht direkt am Getriebegehäuse befestigt ist, in Seitenansicht,

Fig.37    eine Ausführungsform des Schwenkgetriebes nach Fig. 36, in Draufsicht,

./.

H.Tippmann-A.Helm-U.Vetter 14/17-2-1

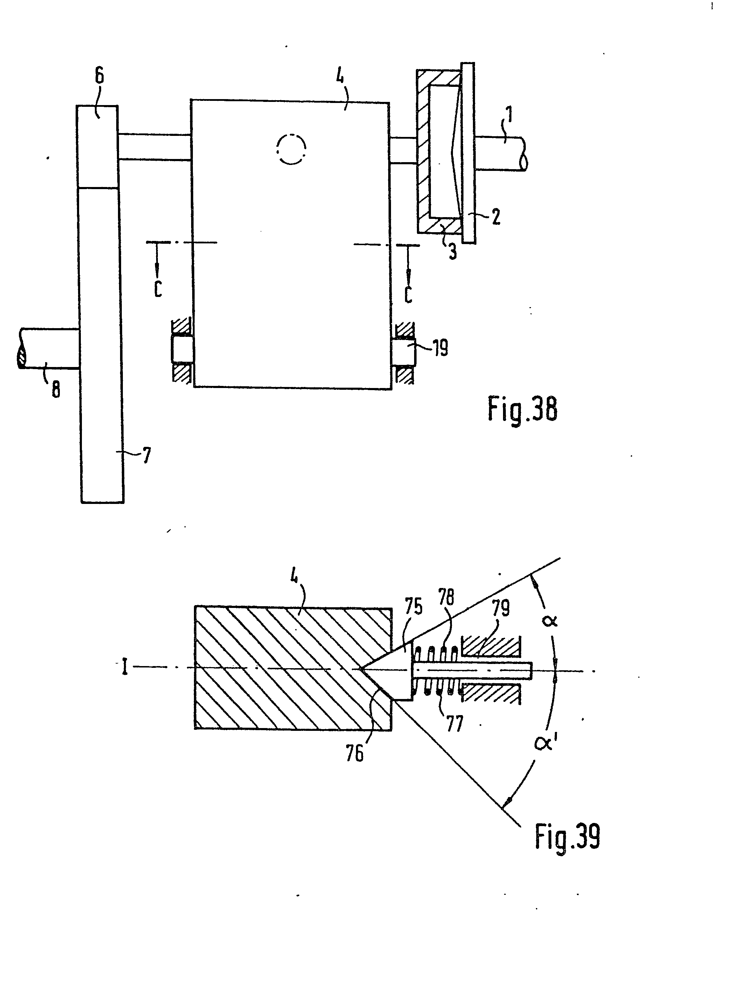

Fig.38     eine Ausführungsform des Schwenkgetriebes,
           bei dem der Schwenkarm in der Mittelstellung
           durch einen Stift gehalten wird, in Seitenan-
           sicht,

Fig.39     einen Schnitt entlang der Linie CC durch das
           Schwenkgetriebe gemäß Fig. 38,

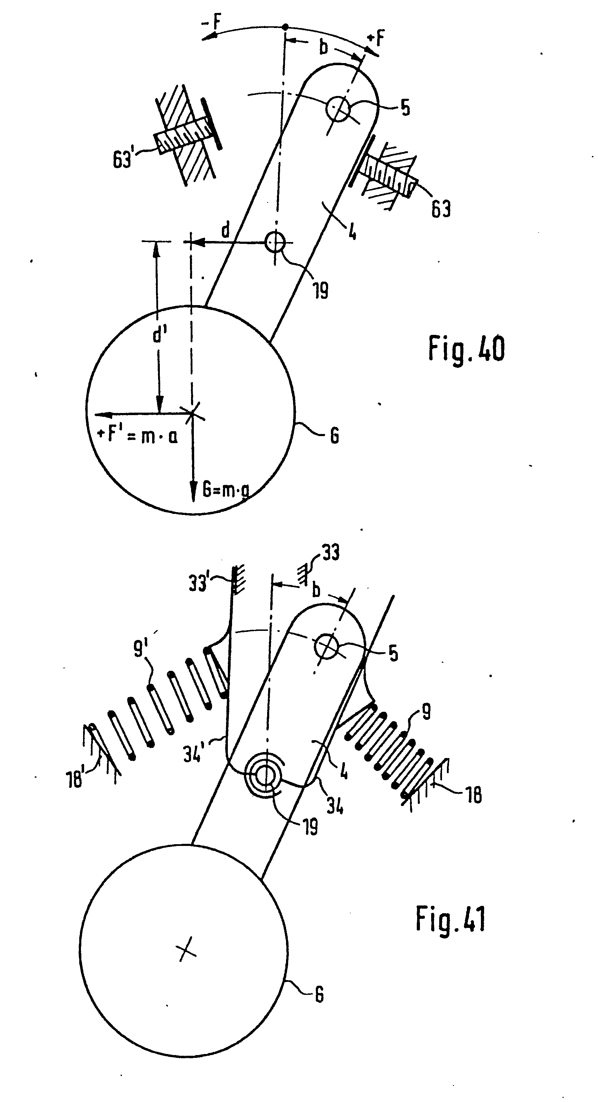

Fig.40     ein weiteres Ausführungsbeispiel eines
           Schwenkgetriebes, bei dem am Schwenkarm ein
           Gewicht angeordnet ist,

Fig.41     ein anderes Ausführungsbeispiel eines
           Schwenkgetriebes nach Fig. 40, bei dem am
           Schwenkarm zusätzlich zu dem Gewicht noch
           federnde Elemente, wie z.B. in den Fig. 10
           und 11 dargestellt, angeordnet sind.

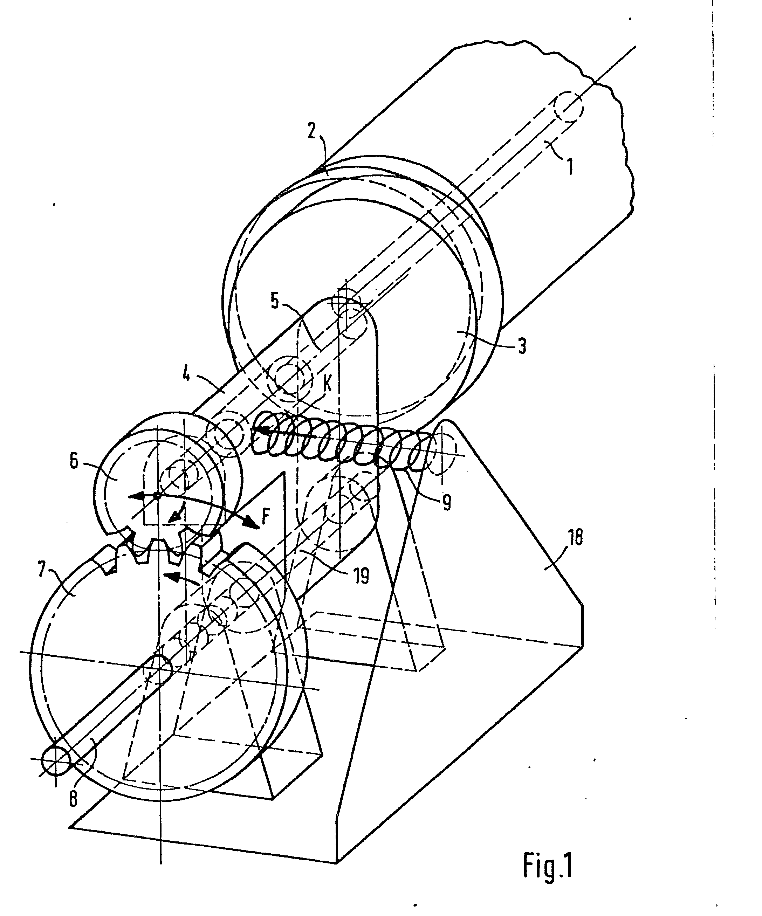

In Fig. 1 ist eine prinzipielle Ausführungsform eines
Schwenkgetriebes, das sehr einfach aufgebaut ist, dargestellt. Von einer ortsfest angeordneten Antriebswelle 1 wird über eine Reibpaarung, die bei diesem Ausführungsbeispiel aus dem Kegel 2 und dem Reibring 3
besteht, die Zwischenwelle 5 angetrieben, die in dem
um die Schwenkachse 19 schwenkbaren Schwenkarm 4 drehbar gelagert ist und mit letzterem gemeinsam schwenkt.
Anstelle der aus Kegel 2 und Reibring 3 bestehenden
Reibpaarung können auch andere Reibpaarungen, z.B.
solche aus Doppelkegelscheiben und Ringen bestehende,
verwendet werden. Bei der in Fig. 1 dargestellten Ausführungsform wird die Anpreßkraft der Reibpaarung auf

./.

H.Tippmann-A.Helm-U.Vetter 14/17-2-1

konventionelle Weise erzeugt, z.B. dadurch, daß im Schwenkarm 4 mindestens eine die axiale Anpreßkraft erzeugende Feder vorhanden ist, die die Zwischenwelle 5 und damit den Reibring 3 axial an den Kegel 2 anpreßt. Es sind auch andere Anpreßeinrichtungen denkbar, wie stirnseitige Anpreßkurven usw.

Von der Zwischenwelle 5 wird über das Zahnradpaar 6 und 7 die ortsfeste Abtriebswelle 8 angetrieben. Anstelle der Kraftübertragung mittels Zahnrädern können auch andere Mittel, wie Reibräder, Umschlingungsgetriebe (Flach-, Keil- oder Zahnriemen) und dgl., verwendet werden, wobei sich bei Umschlingungsgetrieben Drehsinn und Kraftrichtungen umdrehen. Durch Übertragung des Drehmomentes vom Zahnrad 6 auf das Zahnrad 7 wird ein auf den Schwenkarm 4 wirkendes Reaktionsmoment F erzeugt, das bei den in Fig. 1 eingezeichneten Drehrichtungen der Zahnräder 6 und 7 im Uhrzeigersinn auf den Schwenkarm 4 wirkt und diesen im Uhrzeigersinn zu schwenken versucht. Dieser Reaktionskraft F entgegengerichtet muß eine Gegenkraft K sein, die beispielsweise durch die Kraft einer Feder erzeugt wird. Bei einem der Weg-Kraft-Charakteristik entsprechenden Schwenkwinkel des Schwenkarmes 4 sind die beiden Kräfte F und K im Gleichgewicht und es hat sich in der Reibpaarung (Kegel 2 / Reibring 3) ein entsprechendes Übersetzungsverhältnis eingestellt.

./.

H.Tippmann-A.Helm-U.Vetter 14/17-2-1

Falls bei der Übersetzung von der Zwischenwelle 5 auf die Abtriebswelle 8 anstelle der Zahnräder 6, 7 ein Umschlingungsgetriebe verwendet wird, dann wirkt das Reaktionsmoment F im Gegenuhrzeigersinn, weil die beiden Räder des Umschlingungsgetriebes den gleichen Drehsinn aufweisen. In diesem Fall müßte - bezogen auf das Ausführungsbeispiel gemäß Fig. 1 - entweder für die Erzeugung der Gegenkraft K bei unveränderter Anordnung eine Zugfeder verwendet werden oder Druckfeder 9 und Widerlager 18 auf der anderen Seite des Schwenkarmes angeordnet sein.

Die Wirkungsweise des neuen Schwenkgetriebes läßt sich anhand der Figuren 2 und 3 verdeutlichen. Wenn das an der Abtriebswelle 8 abgenommene Abtriebsdrehmoment klein ist, dann ist auch das auf den Schwenkarm 4 wirkende Reaktionsmoment F entsprechend klein. Bei der Einstellung des Gleichgewichtes zwischen der Reaktionskraft F und der Gegenkraft K wird daher der Schwenkarm 4 eine stabile Lage in der Schwenkstellung einnehmen, in der die Druckfeder 9 relativ stark ausgedehnt ist. Dies ist beispielsweise die Schwenkstellung I in Fig.3. In dieser Schwenkstellung stellt sich am Reibgetriebe eine solche Übersetzung ein, die zu einer relativ hohen Abtriebsdrehzahl an der Abtriebswelle 8 führt.

Wächst nun dies an der Abtriebswelle 8 geforderte Abtriebsdrehmoment, dann wächst auch die Reaktionskraft $F_{II}$, wodurch die stabile Schwenkstellung des Schwenkarmes 4 weiter zum Widerlager 18 hin verschoben wird.

./.

H.Tippmann-A.Helm-U.Vetter 14/17-2-1

Der Schwenkarm 4 nimmt dann gegen die Gegenkraft $K_{II}$ die Schwenkstellung II ein, und das Reibgetriebe 2, 3 ist stufenlos auf eine Übersetzung ins Langsame eingeteilt worden. Bei einer weiteren Erhöhung des Abtriebsdrehmomentes verändert sich die stabile Schwenkstellung des Schwenkarmes 4 weiter zum Widerlager 18 hin, welches in Fig. 3 durch die Schwenkstellung III verdeutlicht ist.

Fig. 4 zeigt ein anderes Ausführungsbeispiel des neuen Schwenkgetriebes, bei dem die im Zusammenhang mit Fig. 1 erwähnte, eine axiale Anpreßkraft erzeugende Feder im Schwenkarm, welche den Reibring 3 axial an den Kegel 2 anpreßt, weggelassen ist. Bei diesem Ausführungsbeispiel wird von der Druckfeder 9, deren Lage für die beiden Schwenkstellungen I und III eingezeichnet ist, die Anpreßkraft des Reibgetriebes dadurch aufgebracht, daß die Druckfeder 9 schräg, d.h. unter einem Winkel zur Längsachse des Schwenkarmes, angeordnet ist. Ein Ende der Druckfeder 9 stützt sich am Schwenkarm bei $30_I$ bzw. $30_{III}$ ab, während sich das andere Ende der Druckfeder 9 an dem außerhalb des Schwenkarmes angeordneten Widerlager 18, z.B. einem Gehäuseteil, abstützt. Auf diese Weise wird außerdem die Reaktionskraft zur axialen Anpreßkraft kompensiert, so daß die sonst notwendige bewegliche Abstützung des Schwenkarmes in axialer Richtung gegen das Getriebegehäuse entfällt. Bei einer solchen Ausführungsform wächst in vorteilhafter Weise die Anpreßkraft für die Reibpaarung Kegel 2-Reibring 3 mit zunehmender Übersetzung ins Langsame, d.h. bei hohen Abtriebsdrehzahlen mit niedrigem

./.

H.Tippmann-A.Helm-U.Vetter 14/17-2-1

Abtriebsdrehmoment herrschen geringe Anpreßkräfte und bei niedrigen Abtriebsdrehzahlen mit hohem Abtriebsdrehmoment starke Anpreßkräfte. Diese Lösung kann auch bei den konventionellen, mittels einer Verstellspindel zwangsweise zu verstellenden Schwenkgetrieben zur Erzeugung der Anpreßkraft verwendet werden.

Anstelle der Druckfeder 9 kann bei dem Ausführungsbeispiel gemäß Fig. 4 auch eine Zugfeder verwendet werden. Wenn die Feder 9 in Fig. 4 eine Zugfeder wäre, dann müßte das Ende, das sich in Fig. 4 am Widerlager 18 abstützt, am Schwenkarm und das andere Ende der Feder an einem außerhalb des Schwenkarmes gelegenen Befestigungspunkt befestigt sein.

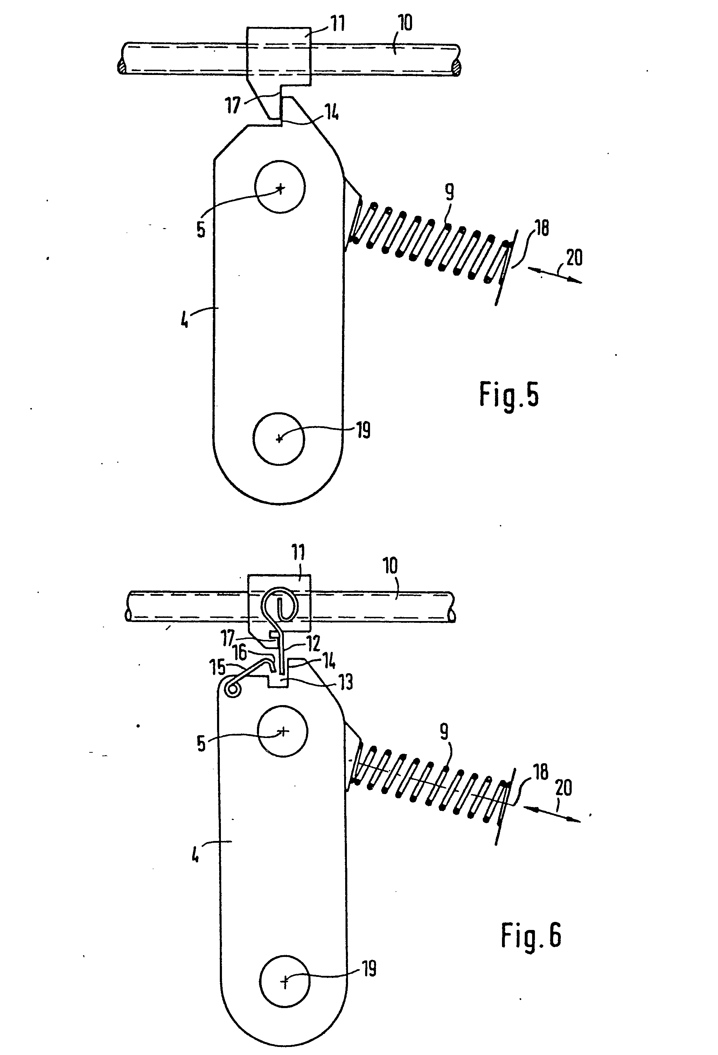

Fig. 6 zeigt ein Ausführungsbeispiel des neuen Schwenkgetriebes, bei dem dessen Übersetzung für Drehmomente an der Abtriebswelle 8 bis zu einem bestimmten Wert fest eingestellt ist. Erst wenn dieses vorwählbare Drehmoment überschritten wird, wird die selbsttätig stufenlose Einstellung wirksam.

Wie bei den konventionellen, zwangsweise zu verstellenden Schwenkgetrieben ist bei diesem Ausführungsbeispiel zum Einstellen der festen Übersetzung eine Verstellspindel 10 vorgesehen, jedoch sind die Verstellspindel 10 und der Schwenkarm 4 nicht fest miteinander gekuppelt. An der in bekannter Weise gegen Verdrehen gesicherten Verstellmutter 11 ist eine Ausklinkfeder 12 befestigt, welche in den Schlitz 13 des Schwenkarmes 4 eingreift. Der Schlitz 13 ist auf der der

./.

H.Tippmann-A.Helm-U.Vetter 14/17-2-1

Druckfeder 9 zugewandten Seite von dem festen Anschlag 14 und auf der anderen Seite von dem Schenkel 16 des federnden Nockens 15 begrenzt.

Dieses Getriebe kann wie jedes stufenlos einstellbare Reibgetriebe durch Betätigung der Verstellspindel 10 von Hand oder mittels eines Einstellmotors auf jede gewünschte Übersetzung eingestellt werden. Überschreitet nun das an der Abtriebswelle entnommene Drehmoment einen bestimmten Wert, dann wird die Reaktionskraft F so groß, daß die Ausklinkfeder 12 ausweicht und der Schwenkarm 4 nach rechts schwenkt und dabei das Reibgetriebe auf eine niedrigere Abtriebsdrehzahl mit höherem Abtriebsdrehmoment verstellt. Die Verstellmutter 11 mit der Ausklinkfeder 12 bleiben in der eingestellten Position.

Sobald die Überlastung des Antriebes vorüber ist, wird der Schwenkarm 4 durch die Druckfeder 9 wieder nach links gedrückt. Dabei kann er jedoch nur bis zur ursprünglich eingestellten Übersetzung schwenken, weil dann der feste Anschlag 14 gegen die Ausklinkfeder 12 stößt. Die Verstellmutter 11 ist mit einem Anschlag 17 versehen, damit die Ausklinkfeder nicht nach links wegknicken kann. Beim Wiedereinrasten der Ausklinkfeder 12 in den Schlitz 13 drückt das untere Ende der Ausklinkfeder 12 den federnden Nocken 15 beim Darüberhinwegstreichen nach unten. Sobald die Ausklinkfeder 12 den Nocken 15 passiert hat, federt dieser wieder zurück und sichert die Lage des Schwenkarmes 4.

./.

H.Tippmann-A.Helm-U.Vetter 14/17-2-1

Diese Ausführungsform des Schwenkgetriebes kann beispielsweise dort eingesetzt werden, wo beim Starten einer Maschine oder beim Anfahren eines Fahrzeuges während dieses Betriebszustandes die Abtriebsdrehzahl selbsttätig unter Abgabe eines erhöhten Drehmomentes erniedrigt werden soll. Wie durch den mit 20 bezeichneten Pfeil angedeutet, soll das Widerlager z.B. mittels einer Gewindespindel, durch einen hydraulischen, pneumatischen oder elektrischen Antrieb, verstellbar ausgebildet sein. Auf diese Weise kann das Drehmoment, bei dem die selbsttätige Verstellung der Übersetzung einsetzen soll, auch während des Betriebes, eingestellt oder nach Bedarf verändert werden.

Fig. 5 zeigt eine vereinfachte Ausführungsform der Vorrichtung gemäß Fig. 6. Es sind hier die Ausklinkfeder 12 und der federnde Nocken 15 entfallen. Stattdessen sind die Anschläge 14 und 17 derart verlängert, daß sie sich gegenseitig berühren. Zwischen den Anschlägen können stoßdämpfende Beläge angebracht sein.

Fig. 7 zeigt die konstruktive Ausgestaltung eines in Richtung des Pfeiles 20 verstellbaren Widerlagers 18, wie es bei den Ausführungsformen gemäß Fig. 1 bis 3 und ggf. 5 und 6 verwendet werden kann. Bei dieser Anordnung stützt sich die Druckfeder 9 an dem um den Drehpunkt 21 schwenkbaren Hebelarm 23 ab. Der Drehpunkt 21 kann mit der Schwenkwelle 19 zusammenfallen. Bei Verwendung in einem Fahrzeug kann die Geschwindigkeit dadurch verändert werden, daß der Hebelarm 23 mit dem Bowdenzug 22 verstellt wird.

./.

H.Tippmann-A.Helm-U.Vetter 14/17-2-1

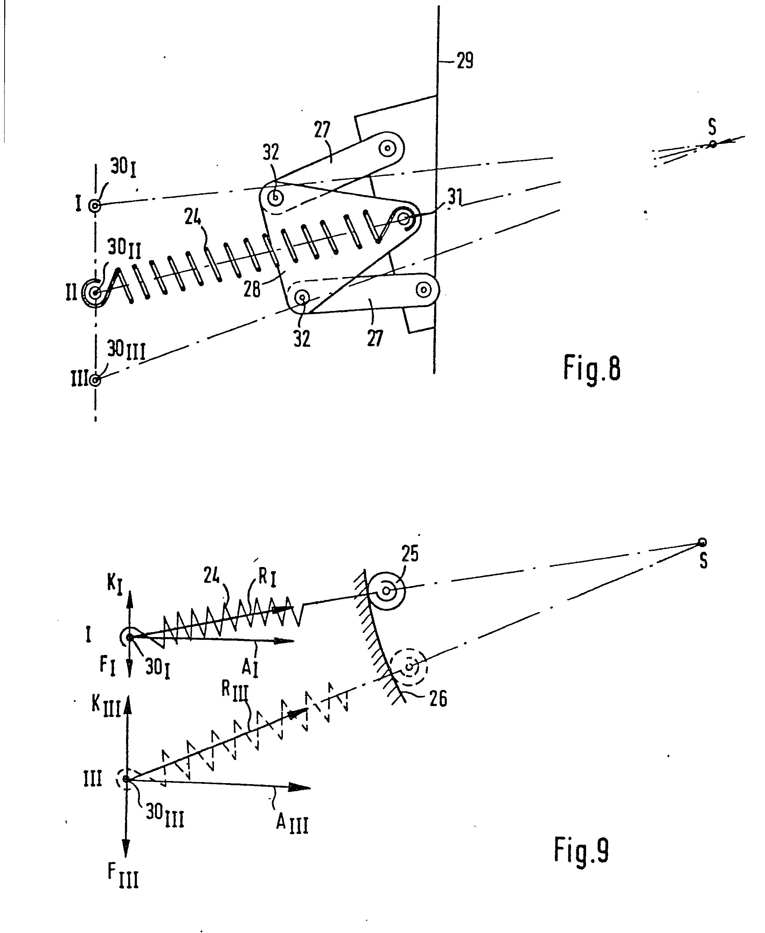

Fig. 9 verdeutlicht eine Ausgestaltung der Ausführungsform gemäß Fig. 4, bei der anstelle der Druckfeder 9
eine Zugfeder 24 verwendet wird. Diese Zugfeder 24 ist
in Fig. 9 für die beiden Schwenkstellungen I und II
des Schwenkarmes eingezeichnet. Sie ist im Punkt 30 am
Schwenkarm befestigt und wie in Fig. 4 (dort allerdings als Druckfeder 9) schräg zur Schwenkwelle angeordnet. Die resultierende Federkraft R setzt sich in
jeder Schwenkstellung zusammen aus der Komponente A
(Anpreßkraft für die Reibpaarung Kegel 2-Reibring 3)
und K (Gegenkraft zur Reaktionskraft F). Der Schnittpunkt S der beiden Resultierenden $R_I$ (in Stellung I
des Schwenkarmes) und $R_{III}$ (in Stellung III des
Schwenkarmes) ist der theoretische Aufhängepunkt der
Feder 24 am Getriebegehäuse. In der Regel steigt jedoch beim Verschwenken des Schwenkarmes 4 K steiler an
als A, so daß der Schnittpunkt S weit außerhalb des
Getriebegehäuses liegt. Auf die Vorzüge des Ansteigens
von A mit zunehmender Übersetzung ins Langsame wurde
bereits im Zusammenhang mit Fig. 4 hingewiesen.

Bei der in Fig. 9 gezeigten Ausgestaltung ist das zweite Ende der Zugfeder 24 an einer Rolle 25 eingehängt,
welche auf der Gleitbahn 26 rollt.

Die Gleitbahn 26 kann die Gestalt eines um den Punkt S
geschlagenen Kreises besitzen. Falls jedoch besondere
Effekte erzielt werden sollen, beispielsweise daß die
Kräfte K und/oder A nicht linear, sondern progressiv
oder degressiv mit dem Verschwenken des Schwenkarmes

./.

H.Tippmann-A.Helm-U.Vetter 14/17-2-1

ansteigen sollen, dann kann dies durch einen entsprechenden Verlauf der Gleitbahn 26, beispielsweise auch
einer Gerade, erzielt werden.

Eine weitere Ausführungsform für die Anhängung der Zugfeder 24 zeigt Fig. 8. Bei dieser sind zwei Laschen 27
außerhalb des Schwenkarmes, z.B. an dem Getriebegehäuse 29, drehbar befestigt. Die beiden anderen Enden
der Laschen 27 sind durch das dreieckige Zwischenglied
28 miteinander verbunden. Da die beiden Laschen 27
nicht parallel zueinander angeordnet sind, ist beim
Verschwenken des Schwenkarmes der Weg des Federanhängepunktes 31 am Zwischenglied 28 größer als der Weg
der Laschen am Anlenkpunkt 32. Dadurch wandert der
theoretische Schnitt- und Aufhängepunkt S der Zugfeder
24 in Fig. 8 nach rechts an einen bestimmbaren Punkt
außerhalb des Getriebegehäuses. Sind die Laschen parallel zueinander angeordnet, dann sind die Wege der
Anlenkpunkte 32 und des Ferderanhängepunktes 31 gleich
lang.

Falls die Laschen 27 an einem quer zur Antriebswelle 1
verschiebbaren Gleitstück befestigt sein sollten oder
sind - bei einem Ausführungsbeispiel wie in Fig. 9 -
die Rollen 25 durch Krafteinwirkung von außen verstellbar ausgebildet, dann kann die gleiche Wirkung wie
beim Ausführungsbeispiel gemäß Fig. 7 erzielt werden.

Fig.10 zeigt den um die Schwenkachse 19 schwenkbaren
Schwenkarm 4 des Schwenkgetriebes. In Abhängigkeit davon, ob an der Abtriebswelle des Schwenkgetriebes ein
positives oder ein negatives Moment abgenommen wird,

./.

H.Tippmann-A.Helm-U.Vetter 14/17-2-1

wirkt auf den Schwenkarm 4 eine positive Rückstellkraft +F oder eine negative Rückstellkraft -F. In
Fig. 10 befindet sich der Schwenkarm 4 in der Mittelstellung. Beim Schwenkgetriebe gemäß Fig. 10 ist zu
beiden Seiten des Schwenkarmes 4 eine Druckfeder 9
bzw. 9' vorhanden.

Die sich mit einem Ende an einem Widerlager 18 bzw.
18' abstützenden Druckfedern 9 bzw 9' greifen mit
ihrem anderen Ende nicht unmittelbar am Schwenkarm an,
sondern an den um die Schwenkachse 19 schwenkbaren
Schwenkbügeln 34 bzw.34'.

Die Druckfedern 9 bzw. 9' sind derart unter Vorspannung eingebaut, daß sie auch dann, wenn sich der
Schwenkarm 4 (wie in Fig. 10 gezeichnet) in Mittelstellung befindet, Kräfte auf die Schwenkbügel 34, 34'
ausüben, diese gegen die Anschläge 33, 33' drücken und
somit den Schwenkarm 4 in der Mittelstellung halten.

Bei der aus Fig. 11 ersichtlichen Darstellung ist der
Schwenkarm 4 aus der Mittelstellung um das "Kreisbogenstück b" nach rechts geschwenkt, weil auf ihn eine
positive Rückstellkraft +F ausgeübt wurde, die größer
als die Vorspannung und ein Teil der Federkraft der
Feder 9 war. Aus Fig. 11 ist auch erkennbar, daß die
Kraft der anderen Druckfeder - hier 9' - nicht über
die Mittelstellung des Schwenkarmes 4 hinaus wirken
kann, weil die Schwenkbewegung des Schwenkbügels 34'
durch den Anschlag 33' gehemmt ist.

./.

H.Tippmann-A.Helm-U.Vetter 14/17-2-1

In Fig. 12 ist über die Ausschwenklänge "Kreisbogenstück b" des Schwenkgetriebes das an der Abtriebswelle abgenommene Moment aufgetragen, wobei angenommen ist, daß die Druckfedern 9 und 9' die gleiche Federkennlinie aufweisen. Die Stellung des Schwenkgetriebes in Fig. 11 würde etwa dem "Punkt D" auf der Kennlinie in Fig. 12 entsprechen. Bei dem Moment $M_1$ ist die Rück-stellkraft F gerade so groß, daß die Vorspannkraft der Druckfeder kompensiert wird. Erst ein Moment, das grö-ßer als $M_1$ ist, bewirkt ein Verschwenken des Schwenkarmes.

Die Ausführungsform des Schwenkgetriebes gemäß Fig. 13 und 14 entspricht in ihrer Funktion der Ausführungsform gemäß Fig. 10 und 11. Bei der Ausführungsform gemäß Fig. 13 und 14 übernehmen die Stößel 35, 35' die Funktion der Schwenkbügel 34, 34'. Die Stößel 35, 35' sind in einem Teil des Getriebegehäuses 29 längsverschiebbar gelagert. Das dem Schwenkarm 4 zugewandte Ende der Stößel 35, 35' ist als Teller 37, 37' ausgebildet, der in eine Vertiefung am Schwenkarm 4 paßt.

Die Druckfedern 9, 9' sind unter Vorspannung zwischen den Tellern 37, 37' und den Widerlagern 18, 18' im Getriebegehäuse 29 eingebaut. Der Verschiebeweg der Stößel 35, 35' ist durch die Hemmungen 36, 36', die z.B. aus Unterlegscheiben und Splinten bestehen können, begrenzt.

Eine weitere Ausführungsform mit gleicher Funktion ist aus den Fig. 15 und 16 ersichtlich. Bei dieser Ausführungsform sind die Druckfedern 9, 9' an einem Ende mit

./.

H.Tippmann-A.Helm-U.Vetter 14/17-2-1

den Befestigungsklammern 39, 39' an den Widerlagern
18, 18' befestigt. Über das andere Ende der Feder 9,
9' ist jeweils eine Kappe 38, 38' gestülpt, welche mittels nichtelastischer Zugelemente 40, 40', wie z.B.
ein Seil, ein Draht, eine Kette oder dgl., mit dem Widerlager 18, 18' verbunden sind. Die Vorspannung der
Druckfeder 9, 9' wird von der Differenz "Länge der entspannten Feder minus Länge des Zugelementes 40, 40'"
bestimmt.

Die Fig. 17 bis 21 zeigen eine Ausführungsform des
Schwenkgetriebes, bei dem als federnde Elemente Zugfedern 24, 24' verwendet sind. Wie in den Fig. 17 und 18
verdeutlicht, ist ein Ende der Zugfedern 24, 24' an
den Widerlagern 18, 18' befestigt. Das andere Ende der
Zugfedern 24, 24' ist mit einem Querjoch 41, 41' versehen, das bei der in Fig. 17 und 18 gezeigten Mittelstellung des Schwenkarmes 4 sowohl in den jeweiligen
Einhängeösen 42, 42' am Schwenkarm 4 eingehängt ist
(siehe Fig. 17) als auch hinter den am Getriebegehäuse
29 angeordneten Anschlägen 43, 43' liegt (siehe Fig.
19). In der Mittelstellung des Schwenkarmes 4 stehen
die Zugfedern 24, 24' unter Vorspannung, wie die Druckfedern in den vorhergehenden Ausführungsbeispielen.

Wird nun an der Abtriebswelle 8 des Schwenkgetriebes
ein positives Moment abgenommen, das $M_1$ übersteigt,
dann bewegt die Reaktionskraft F den Schwenkarm 4 gegen die Kraft der Zugfeder 24 nach rechts (Fig. 20).
Das Querjoch 41 der Zugfeder 24 ist in den Einhängeösen 42 eingehängt und kompensiert die Reaktionskraft
F. Wenn der Schwenkarm 4 nach rechts ausschwenkt,

./.

H.Tippmann-A.Helm-U.Vetter 14/17-2-1

bleibt das Querjoch 41' der Zugfeder 24' hinter den Anschlägen 43' hängen. Die Zugfeder 24' hat keine Wirkung mehr auf den Schwenkarm 4.

Wenn nun an der Abtriebswelle des Schwenkgetriebes ein negatives Moment abgenommen wird, dann schwenkt - sofern dieses Moment größer als $M_1$ ist - der Schwenkarm 4 nach links aus (Fig. 21). In diesem Fall wird in entsprechender Weise die Zugfeder 24 unwirksam, weil das Querjoch 41 hinter den Anschlägen 43 hängen bleibt. Die Kompensation der Reaktionskraft -F wird vollständig von der Zugfeder 24' übernommen.

Fig. 22 zeigt Kennlinien, welche im Prinzip den Kennlinien in Fig. 12 entsprechen, jedoch unterscheiden sich hier Steigung und Vorspannung in den beiden Schwenkrichtungen voneinander. Die Vorspannung kann sowohl hier als auch in den in Fig. 12, 28, 29 und 30 dargestellten Diagrammen dadurch verändert werden, daß die Halterungen der federnden Elemente (Widerlager 18, Befestigung am Getriebegehäuse 29) verstellbar ausgebildet sind. Dies ist durch die strichlierten Kennlinienzweige in Fig. 22 angedeutet. Durch die Anschläge 33, 33', 43, 43' wird vermieden, daß insbesondere bei verschiedenen Steigungen und Vorspannungen der Federkennlinien bzw. bei der Verstellung der Widerlager 18, 18' auf der einen Seite, die Feder(n) auf der anderen Seite beeinflußt wird (werden).

Die Fig. 23 und 24 zeigen eine Ausführungsform des Schwenkgetriebes, bei dem die federnden Elemente zu einer Schenkelfeder 69 zusammengefaßt sind. In dem

./.

H.Tippmann-A.Helm-U.Vetter 14/17-2-1

Ausführungsbeispiel nach Fig. 23 und 24 fällt der Mittelpunkt der Feder 69 mit dem Drehpunkt des Schwenkarmes 4 zusammen.

In der Mittelstellung des Schwenkarmes 4 (Fig. 23) liegen beide Schenkel 70 und 70' der Feder 69 sowohl am Schwenkarm 4 als auch an den Anschlägen 33 und 33' unter mehr oder weniger großer Vorspannung an. Beim Ausschwenken aus der Mittelstellung (Fig. 24) wird der jeweilige Federschenkel 70 oder 70' durch besondere Formgebung (z.B. Mitnahmestift 4') des Schwenkarmes 4 mitgenommen. Der andere Schenkel der Feder 69 stützt sich am Anschlag 33 oder 33' ab und kann deshalb nicht mitschwenken.

Ein Ausführungsbeispiel, bei dem die Kennlinie der Schenkelfeder 69 in ihrer Wirkung auf den Schwenkarm 4 von einer Geraden abweicht, zeigt Fig. 25. Der Drehpunkt (Schwenkachse 19) des Schwenkarmes 4 und der Drehpunkt 69' der Schenkelfeder 69 fallen in diesem Beispiel nicht zusammen. Der Mitnahmestift 4' am Schwenkarm 4 ist im Abstand $r_1$ von dessen Drehpunkt angebracht. Er greift aber im Abstand $d_I$ an der Schenkelfeder 69 an. Beim Verschwenken verringert sich der Abstand d, z.B. im Punkt II' zum Maß $d_{II'}$. Da $d_{II'}$ kleiner als $d_I$ ist, wächst die auf den Mitnahmestift 4' wirkende Federkraft nicht linear mit dem Schwenkweg b sondern progressiv. Wird der Drehpunkt 69' der Schenkelfeder 69 oberhalb der Schwenkachse 19 angebracht, wächst sie degressiv. Es ist auch denkbar, beide Drehpunkte seitlich zueinander zu versetzen.

./.

- 24 -

H.Tippmann-A.Helm-U.Vetter 14/17-2-1

In Fig. 25a sind die Kennlinien von einigen Ausführungsbeispielen dargestellt.

Kennlinie 1: Die beiden Drehpunkte (19 und 69') fallen zusammen. Die Folge ist eine Federkennlinie mit geradem Anstieg.

Kennlinie 2: Der Drehpunkt 69' der Schenkelfeder 69 ist zwischen der Schwenkachse 19 und dem Mitnahmestift 4' angeordnet. Der Hebelarm (Abstand d) wird beim Verschwenken größer, bei gleichem Moment der Schenkelfeder 69 wird die auf den Mitnahmestift 4' wirkende Kraft im Verhältnis kleiner, die Federkennlinie ist degressiv.

Kennlinie 3: Der Drehpunkt der Schenkelfeder liegt hier unterhalb der Schwenkachse 19. Der Hebelarm (Abstand d) wird, wie in der Fig. 25 gezeigt, kleiner, die Federkennlinie ist progressiv.

Kennlinie 4: Der Federdrehpunkt 69' ist zusätzlich noch seitlich versetzt, die Federkennlinie ist z.B. erst progressiv, später degressiv.

Der Vorteil dieser Lösung besteht darin, daß nur ein federndes Element, welches z.B. zwei Schraubenfedern ersetzt, benötigt wird. Außerdem besteht bei geschickter Anordnung der Schenkelfeder 69 kein zusätzlicher Raumbedarf.

Eine andere Lösung, bei der ebenfalls nur eine Feder in beiden Schwenkrichtungen erforderlich ist, welche

./.

H.Tippmann-A.Helm-U.Vetter 14/17-2-1

aber im dargestellten Beispiel keinen Anschlag besitzt, ist die Verwendung von Gummi-Torsions-Federelementen (Fig. 26). Gummi als Federelement besitzt den großen Vorteil einer relativ hohen Eigendämpfung, wodurch sich unter Umständen ein zusätzliches Dämpfungselement (z.B. hydraulischer Dämpfer) erübrigt. Jedes Gummi-Torsions-Element 44 ist an seiner einen Stirnseite fest mit dem Gehäuse 29 verbunden und auf der anderen Seite am Schwenkarm 4 konzentrisch zu dessen Drehpunkt befestigt. Beim Ausschwenken werden die Gummi-Torsions-Elemente 44 in Richtung der eingezeichneten Pfeile verdreht und erzeugen ein Rückstellmoment. Die eventuell erforderliche zusätzliche Schwenkachse 19 in den Gummi-Torsions-Elementen ist hier nicht dargestellt. Anstelle der Gummi-Torsions-Elemente können auch ein oder mehrere andere federnde Elemente, z.B. Spiralfedern, gewundene Biegungsfedern oder Torsionsfedern aus anderen Werkstoffen als Gummi verwendet werden. Andererseits können die hier gezeigten Zug- und Druckfedern auch aus Gummielementen bestehen. Es sind auch pneumatische, hydraulische oder andere Federelemente denkbar. Auch andere Formen von Federn, wie z.B. Blattfedern, sind möglich. Auch sind Federn in einem eigenen Bauteil, wie z.B. ein an dem Schwenkarm 4 angelenkter Federzylinder, vorstellbar.

Fig. 27 zeigt ein Ausführungsbeispiel eines Schwenkarmes 4, bei dem mehrere Federn 45, 46 auf einer Seite des Schwenkarmes 4 angeordnet sind. Diese Anordnung ist selbstverständlich auch auf der anderen Seite des Schwenkarmes 4 möglich. Die Federn 45, 46 stützen sich

./.

H.Tippmann-A.Helm-U.Vetter 14/17-2-1

an Anschlägen 47, 48 ab, die sich entlang des Schwenkweges an verschiedenen Stellen befinden. Die Feder 45
kommt sofort zur Wirkung, die Feder 46 erst nach einem
bestimmten Weg des Schwenkarmes 4 bzw. der Feder 45.
Beide Federn 45 und 46 können gegen einen Anschlag 47
oder 48 vorgespannt sein. Dadurch ergeben sich Charakteristiken, die in den Fig. 28 bis 30 dargestellt
sind. Hier wird nur eine Schwenkrichtung betrachtet.

Fig. 28 zeigt eine Kennlinie, bei der beide Federn 45
und 46 vorgespannt sind, bei der Bewegung des Schwenkarmes 4 in nur einer Richtung. Im unteren Teil der
Kennlinie wirkt sich zuerst nur die Vorspannung der
Feder 45 und dann der verhältnismäßig flache Anstieg
der Federcharakteristik der Feder 45 aus. Nach einem
bestimmten zurückgelegten Weg bzw. Schwenkwinkel des
Schwenkarmes 4 trifft der Schwenkarm 4 auf den Schwenkbügel 34' und verharrt dort solange, bis zur Kraft der
Feder 45 zusätzlich noch die Vorspannung der Feder 46
überwunden ist. Dann wird die Feder 46 von dem zugehörigen Anschlag 48 abgehoben. Wird der Schwenkarm 4
in der gleichen Richtung weitergeschwenkt, steigt die
Kennlinie, beeinflußt durch die Charakteristiken der
Federn 45 und 46, steiler an.

Fig. 29 zeigt die Kennlinie der Federn 45 und 46, wobei hier nur die Feder 45 vorgespannt ist. Nach einem
bestimmten zurückgelegten Weg bzw. Schwenkwinkel des
Schwenkarmes 4 wird die Feder 46, die nicht vorgespannt
ist, wirksam. Von da an steigt die Kennlinie, beeinflußt durch die Charakteristiken der Federn 45 und 46,
steiler an.

0038462

- 27 -

H.Tippmann-A.Helm-U.Vetter 14/17-2-1

Fig. 30 zeigt die Kennlinie der Federn 45 und 46, wobei hier nur die Feder 46 vorgespannt ist, so daß die Charakteristik der Feder 45 beim Punkt 0 einsetzt und zunächst flach ansteigt. Dabei sind die geringen Kräfte auf den Schwenkarm 4 vernachlässigt, die von dem sehr stumpfen Antriebskegel 2 ausgehen. Nach einem bestimmten zurückgelegten Weg bzw. Schwenkwinkel des Schwenkarmes 4 wird die Feder 46 von dem zugehörigen Anschlag 48 abgehoben, wenn die Vorspannung der Feder 46 überwunden ist. Wird der Schwenkarm 4 in der gleichen Richtung weitergeschwenkt, steigt die Kennlinie, beeinflußt durch die Charakteristiken der Federn 45 und 46, steiler an. Es ist auch denkbar, daß weder die Feder 45 noch die Feder 46 vorgespannt sind.

Diese Kombinationen sind sinngemäß bei allen Ausführungsbeispielen sowohl in einer als auch in beiden Schwenkrichtungen anwendbar. Es sind auch mehr als zwei Federn auf jeder Seite des Schwenkarmes 4 denkbar.

Fig. 31 zeigt ein Ausführungsbeispiel, bei dem in beiden Schwenkrichtungen gewundene Biegefedern 50, 51 angeordnet sind. Es sind jedoch auch auf Drehung beanspruchbare Federn denkbar. In der Nullstellung des Schwenkarmes 4 liegen die gewundenen Biegefedern 50, 51 an sich gegenüberliegenden Anschlägen oder Widerlagern 57, 58 an, die beispielsweise über Bowdenzüge 55 einstellbar sein können. Die Anschläge und Widerlager 59, 60 sind so gegenüberliegend angeordnet, daß die Federn 50, 51 für die beiden Schwenkrichtungen des Schwenkarmes 4 sich nicht gegenseitig beeinflussen.

./.

H.Tippmann-A.Helm-U.Vetter 14/17-2-1

Bewegt sich der Schwenkarm 4 (hier nur symbolisch dargestellt) in Richtung "Normalfahrt", d.h. Kraftfluß vom Motor zum Getriebe, dann wird mit der Bewegung des Schwenkarmes 4 die zugehörige Feder 50 oder 51 vom Anschlag 59 oder 60 abgehoben und wirkt gegen den Schwenkarm 4. Die andere Feder, die für die Schwenkrichtung "Talfahrt" oder "Bremsen", d.h. Kraftfluß vom Getriebe zum Motor, vorgesehen ist, liegt unverändert an dem zugehörigen Anschlag an. Erst wenn der Schwenkarm 4 in die Nullstellung zurückgeschwenkt wird, kommt die der Schwenkrichtung "Normalfahrt" zugeordnete Feder wieder zur Anlage an ihrem Widerlager und wirkt nicht mehr gegen den Schwenkarm 4. Wird der Schwenkarm 4 über die Nullstellung hinaus in Richtung "Talfahrt" verschwenkt, liegt die der Schwenkrichtung "Normalfahrt" zugeordnete Feder weiterhin unverändert an ihrem Anschlag an und die der Schwenkrichtung "Talfahrt" zugeordnete Feder wird von ihrem Anschlag abgehoben und beginnt gegen den Schwenkarm 4 zu wirken.

Die Widerlager 57, 58 für beide in entgegengesetzten Richtungen wirkenden Federn sind einstellbar und können z.B. über Bowdenzüge auch während der Fahrt verstellt werden. Für jede Schwenkrichtung des Schwenkarmes 4 ist eine eigene Feder vorgesehen, d.h. der Schwenkarm 4 kann in jeder Schwenkrichtung mit einer anderen Federkonstanten und/oder einer anderen Vorspannung abgestützt werden. Die Charakteristiken der Federn in einer oder in beiden Schwenkrichtungen können dabei so vorgesehen sein, daß die Kennlinien nicht durch den Nullpunkt verlaufen. Als besonders platzsparende Variante könnte man sich vorstellen, daß eine

./.

H.Tippmann-A.Helm-U.Vetter 14/17-2-1

Feder einen Außendurchmesser besitzt, der kleiner ist als der Innendurchmesser der anderen Feder. So können beide Federn konzentrisch ineinanderliegen, wobei die obengenannten Funktionen voll erhalten bleiben.

Fig. 32 zeigt als Ausführungsbeispiel einen Schwenkarm 4, bei dem für beide Schwenkrichtungen nur eine Feder zugeordnet ist. Die Feder 9 ist mittels Befestigungsklammern 39 am Schwenkarm 4 und am Widerlager 18 befestigt. Wirkt die Reaktionskraft +F nach rechts, hat die Feder 9 die Funktion einer Druckfeder. Wirkt die Reaktionskraft -F nach links, hat die Feder 9 die Funktion einer Zugfeder.

Fig. 33, 34 und 35 zeigen ein Ausführungsbeispiel eines Schwenkarmes 4 mit nur einer Feder 24, deren Kraft der Abstützung des Schwenkarmes 4 in beiden Schwenkrichtungen dient. Die Feder 24 kann zusätzlich auch die Anpreßkraft A für den Reibschluß zwischen Reibring 3 und Kegel 2 erzeugen.

Fig. 33 zeigt einen Ausschnitt aus dem Getriebe nach Fig. 1 in Seitenansicht und Fig. 34 die Darstellung des Getriebes nach Fig. 33 in Sicht auf die Feder 24, wobei strichliert die Ausschwenkung des Getriebes in eine Schwenkrichtung angedeutet ist. Fig. 35 zeigt die einzelnen Schwenkstellungen des Schwenkarmes 4 mit den sich daraus ergebenden Kraftkomponenten.

Die Feder 24, die als Zugfeder ausgebildet ist, ist etwa parallel zu den Hauptachsen 5, 19 des Getriebes angeordnet. Auf der einen Seite ist die Feder 24 mit

./.

H.Tippmann-A.Helm-U.Vetter 14/17-2-1

dem Schwenkarm 4 und auf der anderen Seite im Punkt 61 mit dem Gehäuse fest verbunden. Beim Schwenken des Schwenkarmes 4 erhält die Feder 24 eine Lage schräg zur Hauptachse 5 (Fig. 34 und 35) und es wird eine Kraftkomponente K frei (Fig. 35), die mit der Verstellkraft F des Schwenkarmes 4 unter Vernachlässigung der Kräfte, die durch den stumpfen Kegel 2 entstehen, im Gleichgewicht ist. Bei wachsendem Schwenkwinkel des Schwenkarmes 4 steigt die freiwerdende Kraft K aus zwei Gründen. Einmal, weil der Winkel zwischen der Feder 24 und der Getriebeachse 5 größer wird und zum anderen, weil die Feder 24 zusätzlich gedehnt wird und dadurch die resultierende Federkraft R ansteigt.

Aus Gründen der gegenseitigen Abstimmung der einzelnen beim Schwenken des Schwenkarmes 4 auftretenden Kräfte K und A kann der Einhängepunkt 61 der Feder 24 außerhalb des Getriebegehäuses liegen. Er kann dann in seiner Wirkung so zum theoretischen Punkt S verlängert werden, wie in den Fig. 8 und 9 gezeigt. Durch asymmetrische Ausbildung des beschriebenen Gestänges 27, 28 bzw. der Gleitbahn 26, die natürlich auf der anderen Seite entsprechend verlängert werden muß, ist es möglich in den beiden Schwenkrichtungen des Schwenkarmes 4 verschiedene Kräfte K und F mit verschiedenen Charakteristiken über den Verstellweg zu erhalten.

Fig. 36 und 37 zeigen eine Ausführungsform, bei der eine Feder 105 nicht direkt am Getriebegehäuse befestigt ist. Fig. 36 zeigt diese Ausführungsform von der Seite her gesehen und Fig. 37 in Draufsicht. Diese Ausführungsform weist die Vorteile auf, daß dadurch, daß

./.

H.Tippmann-A.Helm-U.Vetter 14/17-2-1

seitlich des Schwenkarmes 4 keine Federn angeordnet sind, Platz gespart wird und zusätzlich über die im Gehäuse befindliche Kurve jede beliebige Verstellcharakteristik selbstverständlich auch eine asymmetrische, für beide Schwenkrichtungen des Schwenkarmes 4 verwirklicht werden kann.

Die Führungsstange 101 wird in zwei Führungen 102, die am Schwenkarm 4 befestigt sind, längsverschieblich, jedoch gesichert gegen Verdrehen, geführt. An der Führungsstange 101 ist an einem Ende die Gabel 103 befestigt, in der eine Rolle 104 gelagert ist. Die Feder 105, die sich an einer der Führungen 102 abstützt, drückt über den Bund 106 die Rolle 104 gegen die Kurvenbahn 107. Die Kurvenbahn 107 ist mit dem Gehäuse verbunden, alle anderen Teile schwenken mit dem Schwenkarm 4. Es ist auch eine umgekehrte Anordnung denkbar, bei der die Kurvenbahn 107 mit dem Schwenkarm 4 schwenkt und die Rolle 104 mit Führungsstange 101 über den Führungen am Getriebegehäuse befestigt sind.

In Fig. 37 ist die Mittelstellung I des Schwenkarmes 4 von oben in Draufsicht dargestellt. Schwenkt der Schwenkarm 4 in Fig. 37 nach unten (Stellung II, Rolle 104 ist strichpunktiert gezeichnet), rollt die Rolle 104 entlang der Kurve 107 "bergauf" und wird nach rechts in Richtung des Reibringes 3 gedrückt. Die Federkraft B wird durch den Winkel der Kurvenbahn 107 in die senkrecht auf die Kurve wirkende Kraft C und die

./.

H.Tippmann-A.Helm-U.Vetter 14/17-2-1

dabei frei werdende Gegenkraft K senkrecht zur Getriebehauptachse zerlegt. Die Gegenkraft K steht damit wieder im Gleichgewicht zur Reaktionskraft F. Es wird dabei, wie bereits vorher schon erwähnt, vernachlässigt, daß durch den sehr großen Winkel des stumpfen Antriebskegels 2 ein Teil der Reaktionskraft F aufgezehrt wird.

Die Reaktionskraft F der Feder 105 kann sich entweder am Getriebegehäuse, z.B. über das Schwenklager 108, abstützen (Fig. 36) oder auch dazu verwendet werden, die Anpreßkraft A für die Reibpaarung Kegel 2 / Reibring 3 zu erzeugen. Dabei kann folgender Effekt vorteilhaft ausgenutzt werden: Mit wachsendem Ausschlag des Schwenkarmes 4 wird der wirksame Radius am Antriebskegel 2 kleiner, die Übersetzung des Reibgetriebes geht mehr ins Langsame, sie wird größer. Bei größerer Übersetzung (z.B. Bergfahrten von Fahrzeugen oder wachsender Durchmesser des Wickelgutes bei Wickelmaschinen) sind jedoch größere Drehmomente an den Antriebsrädern eines Fahrzeuges erforderlich. Größere Drehmomente erfordern größere Anpreßkräfte in der Reibpaarung Kegel 2 / Reibring 3. Mit wachsendem Ausschlag des Schwenkarmes 4 wird die Feder 105 mehr zusammengedrückt und erzeugt somit auch eine größere Reaktionskraft A, was der oben beschriebenen Anordnung entgegen kommt.

Die Rolle 104 kann auch durch ein Gleitstück ersetzt werden.

./.

H.Tippmann-A.Helm-U.Vetter 14/17-2-1

Die Kurvenbahn 107 kann z.B. auf einen Schlitten geführt und verschiebbar angeordnet sein, so daß die Geschwindigkeit dadurch verändert werden kann, daß die Kurvenbahn mit einem Bowdenzug verstellt wird.

Es ist auch möglich, die Führungsstange 101 anders als parallel zur Schwenkachse 19 anzuordnen, z.B. radial wie ein Uhrzeiger. Dann hat die Kurvenbahn 107 die Form ähnlich eines Deckengewölbes. Diese Anordnung hat den Vorteil, daß die Form der Kurve der Kurvenbahn 107 unabhängig vom Winkel des Kegels 2 ist.

Die in den Fig. 26, 32, 33 bis 35 dargestellten Ausführungsbeispiele haben in der Mittelstellung des Schwenkarmes 4 keinen Anschlag, der die vorher beschriebenen Vorteile bietet. Derartig ausgebildeten Getrieben solche Vorteile zu geben, dient die in den Fig. 38 und 39 dargestellte Anordnung. Fig. 38 zeigt die Seitenansicht und Fig. 39 zeigt einen Schnitt C-C durch den Schwenkarm 4. In Fig. 38 ist der Übersicht wegen diese Anordnung nicht eingezeichnet.

Fig. 39 zeigt den Schwenkarm 4 im Schnitt mit der Kerbe 76 in die ein Stift 78 mit der Spitze 75 in der Mittelstellung I des Schwenkarmes 4 einrastet. Der Stift 78 ist im Gehäuse in der Bohrung 79 geführt und wird mittels Feder 77 an den Schwenkarm 4 gedrückt. Wenn der Schwenkarm 4 aus seiner Mittellage schwenken will, muß er erst den Stift 78 zurückdrücken. Das erforderliche Moment (Reaktionskraft F), das notwendig ist, um den Stift 78 zurückzudrücken, wird durch die Feder 77 und

./.

H.Tippmann-A.Helm-U.Vetter 14/17-2-1

den Schrägungswinkel $\alpha$ bestimmt. Für die beiden Kraft-flüsse können verschiedene Schrägungswinkel $\alpha$ und $\alpha_1$ gewählt werden, wenn verschiedene Reaktionskräfte +F und -F gewünscht werden, bei deren Erreichen der Schwenkarm 4 zu schwenken beginnt.

Anstelle der Spitze 75 kann auch eine Rolle 104, wie in den Fig. 36 und 37 gezeigt, verwendet werden. Auch hier können die Befestigungsarten - Stift 75 mit Feder 77 im Schwenkarm 4, Kerbe 76 im Getriebegehäuse - vertauscht werden. Auch ist hier eine andere Lage des Stiftes 78, z.B. radial, möglich, wie vorher bei Fig. 36 und 37 beschrieben.

Es ist auch möglich, die in Fig. 36 bis 39 gezeigte Rolle 104 bzw. die Spitze 75 oder ein ähnliches Gleitstück anstelle einer Feder, z.B. 105 oder 77, mittels eines Gewichtes G oder anderweitig (z.B. durch ein Magnetfeld) an das Gegenstück (z.B. Kurvenbahn 107, Kerbe 76) zu drücken. Entsprechende Umlenkmittel, die die Schwerkraft des Gewichtes G auf die Rolle bzw. Spitze leiten, sind allgemein bekannt.

Bei den gezeigten Ausführungsbeispielen sind auch verschiedene andere Kombinationen denkbar, z.B. beide Fe-dern für die beiden Kraftflüsse können auf einer Seite angeordnet sein, beispielsweise eine Feder als Druckfeder für die eine und die zweite Feder als Zugfeder für die andere Schwenkrichtung des Schwenkarmes 4.

Ein Ausführungsbeispiel eines Schwenkgetriebes, bei dem am Schwenkarm ein Gewicht angeordnet ist, zeigt Fig.40.

./.

H.Tippmann-A.Helm-U.Vetter 14/17-2-1

Ein Gewicht G ist an dem Schwenkarm 4 über den Drehpunkt (19) hinaus angeordnet. Der Schwenkarm 4 ist in
Fig. 40 in positiver Richtung verschwenkt dargestellt.
In diesem Beispiel wird das Gewicht G von der Mittelstellung des Schwenkarmes 4 aus in die dargestellte Lage beim Schwenken des Schwenkarmes 4 angehoben. Das Gewicht G erzeugt dabei eine Gegenkraft. Beim Schwenken
des Schwenkarmes um ein Kreisbogenstück b (in beiden
Richtungen) findet der Schwenkarm 4 eine Anlage an den
verstellbaren Anschlägen 63 bzw. 63'.

In Fig. 41 ist ein anderes Ausführungsbeispiel eines
Schwenkgetriebes dargestellt, bei dem zusätzlich zu dem
Gewicht G am Schwenkarm 4 (siehe Fig. 40) noch federnde
Elemente, wie z.B. in den Fig. 10 und 11 dargestellt,
angeordnet sind.

Die in den Fig. 40 und 41 dargestellten Ausführungsbeispiele können insbesondere in stationären Getrieben
verwendet werden. Es ist auch möglich das Gewicht G so
zu teilen, daß der eine Teil in der einen Schwenkrichtung und der andere Teil in der anderen Schwenkrichtung
des Schwenkarmes 4 wirkt, wobei ebenfalls, wie in den
vorhergehenden Ausführungsbeispielen mit Federelementen
dargestellt und beschrieben, Mittel vorhanden sein können, die die Beeinflussung der nach der einen Richtung
durch Schwenken des Gewichtes entstehenden Kraft durch
die in der anderen Schwenkrichtung entstehende Kraft
und umgekehrt verhindern.

./.

H.Tippmann-A.Helm-U.Vetter 14/17-2-1

Wird das Getriebe einer Beschleunigung bzw. einer Verzögerung durch Normal-, Berg- oder Talfahrt unterworfen, dann entsteht eine Kraft +F' oder -F' aus der Gewichtsmasse m und der jeweiligen Beschleunigung +a bzw. Verzögerung -a. Die Kraft +F' oder -F' kann allein schon ein Verschwenken des Schwenkarmes 4 erzielen, jedoch wird sie sich praktisch zu der durch das eingeleitete Motordrehmoment erzeugten Kraft +F oder -F addieren bzw. von dieser subtrahieren, so daß im Prinzip durch entsprechende Wahl von Gewicht, Hebelarm und eventuell Federelement alle gewünschten Fahrzustände erreicht werden können.

Die Gegenkraft K kann auch durch magnetische Felder erzeugt werden. Die Größe dieser Gegenkraft K kann entweder vom Winkelausschlag (= Länge des Kreisbogenstückes b) des Schwenkarmes 4 und/oder von anderen Größen außerhalb des Getriebes, z.B. Motordrehzahl, Fahrgeschwindigkeit von Fahrzeugen oder Zugkraft im Wickelgut - wie z.B. Wickeldurchmesser bei Wickeln von Spulen in Wickelmaschinen - abhängen. Es sind alle Arten von Magneten, wie z.B. Permanent- oder Elektromagnete, denkbar. Ebenso Kombinationen der einzelnen Magnetarten untereinander mit oder ohne zusätzliche Federelemente und/oder Gewichte.

Diese Magnete bzw. die durch diese erzeugten Magnetfelder können entweder direkt im Schwenkarm und/oder im Gehäuse oder auch in einem besonderen, an dem Schwenkarm angelenkten, Bauteil untergebracht sein.

./.

- 37 -

H.Tippmann-A.Helm-U.Vetter 14/17-2-1

Bei allen hier beschriebenen Ausführungsbeispielen können die federnden Elemente durch andere eine Gegenkraft
erzeugenden Elemente, wie Gewichte oder durch Magnete
erzeugte Kraftfelder, ersetzt werden.

Die einzelnen Getriebestufen oder die ganze Getriebeausführung des in dieser Anmeldung beschriebenen und
dargestellten Schwenkgetriebes kann sowohl naßlaufend
als auch trockenlaufend ausgebildet sein.

./.

H.Tippmann-A.Helm-U.Vetter 14/17-2-1

Bezugszeichen:

| | | | |
|---|---|---|---|
| 1 | Antriebswelle | 28 | Zwischenglied |
| 2 | Kegel | 29 | Getriebegehäuse |
| 3 | Reibring | 30 | Federbefestigung |
| 4 | Schwenkarm | | am Schwenkarm 4 |
| 4' | Mitnahmestift | 31 | Federbefestigung am |
| 5 | Zwischenwelle | | Zwischenglied 28 |
| 6 | Zahnrad | 32 | Gelenk zwischen 27 |
| 7 | Zahnrad | | und 28 |
| 8 | Abtriebswelle | 33 | Anschlag |
| 9 | Druckfeder | 33' | Anschlag |
| 10 | Verstellspindel | 34 | Schwenkbügel |
| 11 | Verstellmutter | 34' | Schwenkbügel |
| 12 | Ausklinkfeder | 35 | Stößel |
| 13 | Schlitz | 35' | Stößel |
| 14 | Anschlag | 36 | Hemmung |
| 15 | Nocken | 36' | Hemmung |
| 16 | Schenkel | 37 | Teller |
| 17 | Anschlag | 37' | Teller |
| 18 | Widerlager | 38 | Kappe |
| 18' | Widerlager | 38' | Kappe |
| 19 | Schwenkachse | 39 | Befestigungsklammer |
| 20 | Pfeil | 39' | Befestigungsklammer |
| 21 | Drehpunkt | 40 | Zugelement |
| 22 | Bowdenzug | 40' | Zugelement |
| 23 | Hebelarm | 41 | Querjoch |
| 24 | Zugfeder | 41' | Querjoch |
| 24' | Zugfeder | 42 | Einhängeöse |
| 25 | Rolle | 42' | Einhängeöse |
| 26 | Gleitbahn | 43 | Anschlag |
| 27 | Laschen | 43' | Anschlag |

H.Tippmann-A.Helm-U.Vetter 14/17-2-1

| 44 | Gummi-Torsions-Element | A | Anpreßkraft |
| 45 | Feder | B | Kraft |
| 46 | Feder | C | Kraft |
| 47 | Anschlag | F | Reaktionskraft |
| 48 | Anschlag | K | Gegenkraft |
| 50 | Biegefeder | R | Federkraft |
| 51 | Biegefeder | b | Kreisbogenstück |
| 57 | Widerlager | +a | Beschleunigung |
| 58 | Widerlager | -a | Verzögerung |
| 59 | Anschlag | $M_1$ | Moment |
| 60 | Anschlag | $r_1$ | Abstand |
| 61 | Einhängepunkt | $d_I$ | Abstand |
| 63 | Anschlag | $d_{II'}$ | Abstand |
| 63' | Anschlag | I | Mittelstellung |
| 69 | Schenkelfeder | II | Stellung |
| 69' | Drehpunkt | II' | Stellung |
| 70 | Federschenkel | $\alpha$ | Schrägungswinkel |
| 70' | Federschenkel | $\alpha_1$ | Schrägungswinkel |
| 75 | Spitze | G | Gewicht |
| 76 | Kerbe | m | Gewichtsmasse |
| 77 | Feder | D | Punkt |
| 78 | Stift | S | Schnittpunkt der |
| 79 | Bohrung | | Kräfte |
| 101 | Führungsstange | H | Verstellkraft· |
| 102 | Führung | | |
| 103 | Gabel | | |
| 104 | Rolle | | |
| 105 | Feder | | |
| 106 | Bund | | |
| 107 | Kurvenbahn | | |

- 1 -

Patentanwalt
Dipl.-Phys. Leo Thul
S t u t t g a r t


H.Tippmann-A.Helm-U.Vetter 14/17-2-1


Patentansprüche:

1. Selbsttätig stufenlos einstellbares Schwenkgetriebe, bei dem Antrieb und Abtrieb über ein Reibgetriebe mit einer Anpreßvorrichtung miteinander gekoppelt sind, an dem gleichfalls eine mit dem Reibgetriebe gekoppelte, das Drehmoment auf die Abtriebswelle übertragende Übersetzung angeordnet ist, d a d u r c h   g e k e n n z e i c h n e t,  daß der Schwenkarm (4) von der Mittelstellung aus nach einer oder nach beiden Richtungen verschwenkbar ist und sich in der entsprechenden Schwenkrichtung gegen mindestens ein eine Gegenkraft erzeugendes Element abstützt.

2. Schwenkgetriebe nach Anspruch 1, d a d u r c h   g e k e n n z e i c h n e t,  daß das eine Gegenkraft erzeugende Element ein federndes Element (z.B. 9, 24) ist.

./.


ZT/P3-Bö/Kc
24.03.1981

0038462

- 2 -

H.Tippmann-A.Helm-U.Vetter 14/17-2-1

3. Schwenkgetriebe nach Anspruch 1,
d a d u r c h   g e k e n n z e i c h n e t ,   daß
das eine Gegenkraft erzeugende Element ein Gewichts-
Element (G) ist.

4. Schwenkgetriebe nach Anspruch 1,
d a d u r c h   g e k e n n z e i c h n e t ,   daß
die Gegenkraft zur Abstützung des Schwenkarmes (4)
durch entsprechend gepolte magnetische Felder erzeugt wird.

5. Schwenkgetriebe nach Anspruch 1,
d a d u r c h   g e k e n n z e i c h n e t ,   daß
sich der Schwenkarm (4) an einem außerhalb des
Schwenkarmes gelegenen Widerlager (18) mittels eines federnden Elementes (9, 24) elastisch abstützt,
welches derart mit seinem einen Ende am Schwenkarm
und seinem anderen Ende am Widerlager befestigt ist,
daß seine Längsachse mit der durch die Schwenkachse
des Schwenkarmes verlaufende Ebene einen Winkel einschließt.

6. Schwenkgetriebe nach Anspruch 5,
d a d u r c h   g e k e n n z e i c h n e t ,   daß
der Winkel ein rechter Winkel ist.

7. Schwenkgetriebe nach den Ansprüchen 5 und 6,
d a d u r c h   g e k e n n z e i c h n e t ,   daß
das Widerlager ortsfest angeordnet ist.

./.

H.Tippmann-A.Helm-U.Vetter 14/17-2-1

8. Schwenkgetriebe nach den Ansprüchen 5 und 6,
d a d u r c h   g e k e n n z e i c h n e t,   daß
das Widerlager (18) verstellbar angeordnet ist.

9. Schwenkgetriebe nach den Ansprüchen 5, 6 und 8,
d a d u r c h   g e k e n n z e i c h n e t,   daß
das Widerlager an einem um einen Drehpunkt (21)
schwenkbaren Hebelarm (23) befestigt ist.

10. Schwenkgetriebe nach Anspruch 5 und wenigstens einem der Ansprüche 6 bis 9,
d a d u r c h   g e k e n n z e i c h n e t,   daß
es mit einer Abtriebsdrehzahlbegrenzung versehen
ist.

11. Schwenkgetriebe nach Anspruch 10,
d a d u r c h   g e k e n n z e i c h n e t,   daß
parallel zur Schwenkrichtung des Schwenkarmes (4)
eine Verstellspindel (10) mit einer darauf verschiebbaren Verstellmutter (11) angeordnet ist sowie Verstellmutter und Schwenkarm mit miteinander
in Eingriff gelangenden Anschlägen (14, 17) versehen sind.

12. Schwenkgetriebe nach Anspruch 10,
d a d u r c h   g e k e n n z e i c h n e t,   daß
parallel zur Schwenkrichtung des Schwenkarmes (4)
eine Verstellspindel (10) mit einer darauf verschiebbaren Verstellmutter (11) angeordnet, die
Verstellmutter (11) mit einer in einen Längsschlitz
(13) im Schwenkarm eintauchenden Ausklinkfeder(12),

H.Tippmann-A.Helm-U.Vetter 14/17-2-1

die eine Seite des Längsschlitzes mit einem festen Anschlag (14) und die andere Seite mit einem federnden Nocken (15) versehen ist.

13. Schwenkgetriebe nach Anspruch 5 und wenigstens einem der Ansprüche 6 bis 12,
dadurch gekennzeichnet, daß das federnde Element eine Zugfeder (24) ist, deren vom Einhängepunkt (30) am Schwenkarm (4) abgewandtes Ende an einem solchen beweglichen Punkt (31) eingehängt ist, daß sich sämtliche gedachten Verbindungslinien zwischen den ortsverständlichen Einhängepunkten (30) und dem beweglichen Punkt (31) in einem theoretischen Einhängepunkt (S) außerhalb des Getriebes schneiden.

14. Schwenkgetriebe nach Anspruch 13,
dadurch gekennzeichnet, daß der bewegliche Punkt (31) in der Achse einer auf einer Gleitbahn (26) frei oder zwangsgeführt beweglichen Rolle (25) angeordnet ist.

15. Schwenkgetriebe nach Anspruch 13,
dadurch gekennzeichnet, daß der bewegliche Punkt (31) auf einem Zwischenglied (28) angeordnet ist, welches mittels Laschen (27) außerhalb des Schwenkarmes (4), wie an einem Getriebegehäuse (29), schwenkbar befestigt ist.

./.

H.Tippmann-A.Helm-U.Vetter 14/17-2-1

16. Schwenkgetriebe nach Anspruch 5 und wenigstens einem der Ansprüche 6 bis 15, d a d u r c h   g e k e n n z e i c h n e t,   daß sowohl das Reibgetriebe als auch die Übersetzung trocken laufend angeordnet sind.

17. Schwenkgetriebe nach Anspruch 3, d a d u r c h   g e k e n n z e i c h n e t,   daß in Verlängerung des Schwenkarmes (4) über den Drehpunkt (19) hinaus ein oder mehrere Gewichts-Elemente (G) angeordnet sind.

18. Schwenkgetriebe nach einem der vorhergehenden Ansprüche, d a d u r c h   g e k e n n z e i c h n e t,   daß Mittel zur Verhinderung der Kraftwirkung jedes die jeweilige Gegenkraft erzeugenden Elementes, beim Schwenken des Schwenkarmes (4) über die Mittelstellung hinaus, vorhanden sind.

19. Schwenkgetriebe nach Anspruch 2, d a d u r c h   g e k e n n z e i c h n e t,   daß mindestens ein federndes Element (9, 24, 50, 51, 69, 105) angeordnet ist und in der Mittelstellung des Schwenkarmes (4) Mittel zur Verhinderung der Kraftwirkung des federnden Elementes beim Schwenken des Schwenkarmes (4) über die Mittelstellung hinaus vorgesehen sind.

./.

H.Tippmann-A.Helm-U.Vetter 14/17-2-1

20. Schwenkgetriebe nach Anspruch 2 oder 19, dadurch gekennzeichnet, daß das oder die federnden Elemente Druckfedern (9, 9') sind und ihre zum Schwenkarm (4) hin weisenden Enden an Schwenkbügeln (34, 34') angreifen, deren Schwenkbewegung durch Anschläge (33, 33') begrenzt ist.

21. Schwenkgetriebe nach Anspruch 2, dadurch gekennzeichnet, daß ein federndes Element aus einem, in einem Lager längsverschiebbar geführten, mit seinem einen Ende an dem Schwenkarm angelenkten und mittels einer Druckfeder (9, 9') vorgespannten Stößel (35, 35') besteht, dessen Längsverschiebeweg zum Schwenkarm (4) hin durch eine Hemmung (36, 36') begrenzt ist.

22. Schwenkgetriebe nach Anspruch 2, dadurch gekennzeichnet, daß das oder die federnden Elemente Druckfedern (9,9') sind, deren vom Schwenkarm (4) abgewandten Enden an einem Widerlager (18, 18') befestigt sind und auf deren anderes Ende eine Kappe (38, 38') aufgesetzt ist, welche über ein nicht federndes Zugelement (40,40') mit dem Widerlager (18, 18') verbunden ist.

23. Schwenkgetriebe nach Anspruch 2, dadurch gekennzeichnet, daß das oder die federnden Elemente Zugfedern (24, 24') sind, deren vom Schwenkarm (4) abgewandten Enden an einem Widerlager (18, 18') befestigt sind und an

./.

H.Tippmann-A.Helm-U.Vetter 14/17-2-1

deren anderem Ende ein Querjoch (41, 41') befestigt ist, welches in Einhängeösen (42, 42') am Schwenkarm (4) und/oder an Anschlägen (43,43') am Getriebegehäuse (29) eingreift.

24. Schwenkgetriebe nach Anspruch 2, d a d u r c h   g e k e n n z e i c h n e t ,   daß das oder die federnden Elemente Drehfedern, z.B. gewundene Biegungsfedern, auf Torsion beanspruchbare Federn, Schenkelfedern usw., sind.

25. Schwenkgetriebe nach einem der Ansprüche 2 oder 24, d a d u r c h   g e k e n n z e i c h n e t ,   daß die Drehfeder (z.B. 50, 51, 70, 70') zur Schwenkachse (19) koaxial angeordnet ist.

26. Schwenkgetriebe nach einem der Ansprüche 2 oder 24, d a d u r c h   g e k e n n z e i c h n e t ,   daß die Drehfeder (z.B. 70, 70') und die Schwenkachse (19) keine gemeinsame Drehachse (z.B. 69) aufweisen.

27. Schwenkgetriebe nach Anspruch 1, d a d u r c h   g e k e n n z e i c h n e t ,   daß die Abstützung des Schwenkarmes (4) über ein Widerlager erfolgt, das die Form einer Kurve (z.B. 107) aufweist.

28. Schwenkgetriebe nach Anspruch 1, d a d u r c h   g e k e n n z e i c h n e t ,   daß sich der Schwenkarm (4) gegen mindestens ein ortsfestes Widerlager (z.B. 57, 58) elastisch abstützt.

./.

H.Tippmann-A.Helm-U.Vetter 14/17-2-1

29. Schwenkgetriebe nach einem der vorhergehenden Ansprüche,
d a d u r c h   g e k e n n z e i c h n e t,   daß
mindestens eines der Widerlager (z.B. 57, 58) verstellbar angeordnet ist.

30. Schwenkgetriebe nach einem der vorhergehenden Ansprüche,
d a d u r c h   g e k e n n z e i c h n e t,   daß
ein oder mehrere die Gegenkraft erzeugenden Elemente (z.B. 46) erst nach einem bestimmten Winkelausschlag des Schwenkarmes (4) wirksam werden.

31. Schwenkgetriebe nach einem der vorhergehenden Ansprüche,
d a d u r c h   g e k e n n z e i c h n e t,   daß
das oder die federnden Elemente unterschiedliche
Federkennlinien aufweisen.

32. Schwenkgetriebe nach Anspruch 31,
d a d u r c h   g e k e n n z e i c h n e t,   daß
Mittel (Anschläge z.B. 59, 60) vorgesehen sind, die
verhindern, daß sich die Federkennlinien in den
beiden Schwenkrichtungen gegenseitig beeinflussen.

33. Schwenkgetriebe nach Anspruch 32,
d a d u r c h   g e k e n n z e i c h n e t,   daß
die Mittel zur Verhinderung der Kraftwirkung des
die Gegenkraft erzeugenden Elementes über die Mittelstellung hinaus aus mindestens einer feder- oder

./.

H.Tippmann-A.Helm-U.Vetter 14/17-2-1

gewichtsbelasteter Arretierung (Spitze 75, Rolle 104) besteht, die auf ein entsprechendes Gegenstück (Kerbe 76, Kurvenbahn 107) drückt.

34. Schwenkgetriebe nach einem der vorhergehenden Ansprüche,
d a d u r c h   g e k e n n z e i c h n e t,   daß mindestens ein gemeinsames eine Gegenkraft erzeugendes Element (9, 24, 44, 69) in beiden Schwenkrichtungen wirksam ist.

35. Schwenkgetriebe nach Anspruch 34,
d a d u r c h   g e k e n n z e i c h n e t,   daß das gemeinsame die Gegenkraft erzeugende Element eine Feder ist und schräg zur Schwenkachse (19) angeordnet ist.

36. Schwenkgetriebe nach Anspruch 35,
d a d u r c h   g e k e n n z e i c h n e t,   daß das gemeinsame die Gegenkraft erzeugende Element eine Feder ist und in der Mittelstellung des Schwenkarmes (4) etwa parallel zur Schwenkachse (19) angeordnet ist.

37. Schwenkgetriebe nach einem der vorhergehenden Ansprüche,
d a d u r c h   g e k e n n z e i c h n e t,   daß das eine Gegenkraft erzeugende Element gleichzeitig den Schwenkarm (4) axial in Richtung zum Kegel (2) zu verschieben versucht und so die erforderliche Anpreßkraft für die Reibpaarung (Kegel 2 - Reibring 3) erzeugt.

0038462

Fig.1

H.Tippmann-14

0038462

Fig.2

Fig.3

Fig.4

H.Tippmann-14
2. 6. 80

0038462

Fig.5

Fig.6

H.Tippmann-14
2.6.80

Fig.7

0038462

0038462

Fig.8

Fig.9

H.Tippmann-14

0038462

Fig.10

Fig.11

Fig.12

Fig.13

Fig.15

Fig.14

Fig.16

0038462

0038462

Fig.17

Fig.18

Fig.19

Fig.20

Fig.21

Fig.22

Fig.23

Fig.24

Fig.25

Fig. 25a

Fig. 26

Fig. 27

0038462

Fig.28

+M

45+46

45

+b

Fig.29

+M

45+46

45

+b

Fig.30

+M

45+46

45

+b

Fig.31

Fig.32

0038462

Fig.33

Fig.34

Fig.35

Fig.36

Fig.37

0038462

Fig.38

Fig.39

Fig.40

Fig.41